# EUROPEAN PATENT SPECIFICATION

(11) **EP 3 464 973 B1**
(45) Date of publication and mention of the grant of the patent: **24.03.2021**
(21) Application number: 17737929.4
(22) Date of filing: 31.05.2017
(51) Int. Cl.: F16L 1/11

(54) **SMOKETAPE**
RAUCHBAND
BANDE DE DÉTECTION PAR CREATION DE FUMÉE

(30) Priority: 31.05.2016 US 201662343794 P
(43) Date of publication of application: 10.04.2019
(73) Proprietor: EAS IP, LLC, Charlottesville, VA 22911 (US)
(72) Inventor: DUNN, Ryan, C., Charlottesville, VA 22911 (US); WRIGHT, Bryan, D., Charlottesville, VA 22911 (US); TUBBS, Donald, A., Charlottesville, VA 22911 (US); PARMAN, Joshua, M., Charlottesville, VA 22911 (US)
(74) Representative: Verhees, Godefridus Josephus Maria
(86) International application number: PCT/US2017/035327
(87) International publication number: WO 2017/210370

(56) References cited:
- US-A- 3 581 703
- US-A- 3 718 113
- US-A- 5 116 654

## Description

### CROSS-REFERENCE TO RELATED APPLICATIONS

This application claims the benefit under 35 U.S.C. 119(e) of U.S. patent application 62/343,794 filed on 31 May 2016. This invention also uses a portion of the invention disclosed in commonly owned U.S. Patent application 14/318,127, filed 27 June 2014, now US 9,732,883, issued on 15 August 2017 .

### FIELD OF THE INVENTION

The present invention relates generally to the field of creating a localized warning to prevent damage to buried pipelines and other buried infrastructure.

### BACKGROUND OF THE INVENTION

There are currently three general types of systems used to address the problem of excavation damage to underground utilities. The first type are systems and products that require a proactive excavation crew (e.g. Call 811). The second type are passive visual indicators such as marker tape, marker mesh, and signs on the surface. The third type are monitored video and sensor systems such as acoustic, flyover, and seismic systems.

A modification of passive visual indicators is also known which utilizes an active visual signal produced by excavation equipment operating in the vicinity of the buried infrastructure. In this modification, the passive visual indicator [for example, a continuous marker tape] is modified to comprise a normally inert signal generator which interacts with excavation equipment to produce a visual signal [usually a cloud of smoke] when the normally inert signal generator is activated by being struck by a portion of the excavation equipment, e.g. a backhoe bucket. Some prior art systems in this category are Schertler et al. (US 3,718,113), Hosack (US 3,581,703), and Dunn, et al. (US 2015-0260312 A1- Now U.S. Patent 9,568,121, issued 14 February 2017). Each will provide a visible signal at the site of the potentially damaging activity.

Schertler et al. (US 3,718,113), provides a separated series of discrete chemical smoke generators encased in a continuous outer cover to provide an elongated tubular assembly. Schertler et al.
provides a for a single elongated tubular assembly to be buried above the pipeline or, as an alternate, provides for two elongated tubular assemblies buried above the pipeline with one on each side of the pipeline. Hosack (US 3,581,703) provides a continuous tape assembly with multiple, discrete smoke generators provided along the length of the tape. The assembly is then buried just above the pipeline. With both the Schertler et al. and Hosack indicators, when excavation equipment digs near the buried pipeline, the excavation equipment activates the smoke generators in both systems. The Dunn et al. invention provides an elongated tube which will provide a smoke signal when disturbed by excavation equipment. A series of these tubes are buried near the buried pipeline in positions where they will be struck and activated by excavation equipment before the excavation equipment strikes the pipeline.

Currently, marker tape is the standard protective measure used in new installations of pipelines. Laying marker tape, a passive visual indicator, is well known and easily done by pipeline installation crews. In the industry, until now, there has been no available product (signal tape) which assertively provides a vivid signal to an excavator operator of the close proximity and impending damage to a buried pipeline which may be installed in the same manner as marker tape. Embodiments of such signal tape are disclosed herein.

### SUMMARY OF THE INVENTION

The signal tape of the invention is defined in claim 1 and provides a localized, immediate and forceful signal to an excavator operator of the immediate proximity of and of impending damage to buried infrastructure. Thus, the excavation equipment operator is forcefully warned to immediately stop excavation operations. The signal provided cannot be misinterpreted since activation of the signal tape creates a signal that intuitively warns of danger. It is noted that the signal tape of the invention may be installed in the same manner, at the same time, by the same crews which now install marker tape, a passive visual marker which often is unseen by an excavator operator and this is ineffective Preferred embodiments of the invention are defined in the dependent claims.

The signal tape of the current invention, when triggered, produces an immediate plume of colored gas/smoke of sufficient volume to warn those in the immediate area of danger, but not so large as to alarm those not in close proximity. In one embodiment, buried signal tape comprises a series of colored gas/smoke generators connected by a core material comprising wire, fabric or cord with the whole assembly contained within two opposing, protective layers of plastic film. When the wire, fabric or cord is engaged by excavation equipment, it pulls on the signal tape and ignites one or more of the colored gas/smoke generators. The ignited generators are then pulled by the excavation equipment out of the ground by the wire, fabric or cord. The smoke (which may be vividly colored and/or highly odiferous) is easily and readily seen by an excavation equipment operator. No spotter is thus needed in addition to the excavation equipment operator. The cloud of colored gas/smoke will be much more intense than with previous systems because the previous systems require the smoke to be generated underground (at the level of the buried system) and for the smoke to then make its way to the surface. Indeed, with the present invention, an active [ignited and producing smoke] generator is often contained in the excavation bucket itself-- so the smoke appears to be coming from the operator's own excavation equipment. As noted above, this sort of signal cannot be misinterpreted and intuitively warns of danger.

It should be noted that the terms colored gas and smoke are used interchangeably throughout this application. Wherever the term "colored gas" is used, it should be understood that the term "smoke" could also be used and they are considered the same for the purposes of this invention. From this point on in this application, only the terms "smoke" and "smoke generator" will be used; however, it should be understood that these terms are intended to mean the same thing as "colored gas" or "colored gas generator". As noted above, in § **[0012]**, the smoke generated by the smoke generators of this invention may be vividly [brightly] colored and/or highly odiferous. It should also be noted that the terms "tape" and signal tape are used interchangeably herein and mean the same thing. That is a warning device which is designed and constructed to be buried over or near buried infrastructure such as a buried pipeline.

### BRIEF DESCRIPTION OF THE DRAWINGS

Figure 1 shows a section of signal tape according to a first embodiment of the invention having a first embodiment of a smoke generator according to the invention.
Figure 2 shows a side view of the signal tape shown in Figure 1 from the perspective of arrows A - A as shown in Figure 1.
Figure 3 shows a section of signal tape having multiple smoke generators as shown in Figure 1 connected in a series configuration.
Figure 4 shows a section of signal tape according to a second embodiment of the invention having two parallel strings of smoke generators with each string connected in a series configuration .
Figure 5 shows a section of signal tape according to a third embodiment of the invention having multiple smoke generators connected in a series configuration.
Figure 6 shows a roll of signal tape according to the first embodiment of the invention being partially unwound prior to installation.
Figure 7 shows a second embodiment of a smoke generator for use in a series configuration signal tape according to the invention.
Figure 8 shows a partial cross-sectional view of the smoke generator of Figure 7.
Figure 9 shows another partial cross-sectional view of the smoke generator of Figure 7.
Figure 10 shows a third embodiment of a smoke generator for use in use in a series configuration signal tape according to the invention.
Figure 11 shows a fourth embodiment of a smoke generator for use in use in a series configuration signal tape according to the invention.
Figure 12 shows a partial cross-sectional view of the smoke generator of Figure 11.
Figure 13 shows another partial cross-sectional view of the smoke generator of Figure 11.
Figure 14 shows a fifth embodiment of a smoke generator for use in use in a series configuration signal tape according to the invention.
Figure 15 shows a section of a series configuration signal tape according to this invention having multiple colored gas/smoke generators identical to those shown in Figure 14.
Figure 16 shows three colored gas/smoke generators identical to those shown in Figure 7 connected in parallel for use in a ladder configuration signal tape according to this invention.
Figure 17 shows a sixth embodiment of a colored gas/smoke generator for use in a ladder configuration signal tape according to this invention.
Figure 18 shows a cross-section of the colored gas/smoke generator shown in Figure 17.
Figure 19 shows a ladder configuration signal tape according to this invention using multiple colored gas/smoke generators as shown in Figures 17 and 18.
Figure 20 shows a ladder configuration signal tape according to this invention using multiple colored gas/smoke generators as shown in Figures 17 and 18.
Figure 21 shows a section of signal tape according to another embodiment of the invention having a smoke generator identical to that shown in Figure 1; however, the signal tape does not have the ignition spring attached to the igniter portion of the smoke generator.
Figure 22 shows a side view of the signal tape shown in Figure 21 from the perspective of arrows B - B as shown in Figure 21.
Figure 23 shows a section of signal tape having multiple smoke generators as shown in Figure 21 connected in a series configuration.
Figure 24 shows a section of signal tape according to another embodiment of the invention having two parallel strings of smoke generators similar to those shown in Figure 23, with each string connected in a series configuration .
Figure 25 shows a section of signal tape according to another embodiment of the invention having multiple smoke generators similar to those shown in Figure 21 connected in a series configuration.
Figure 26 shows a section of signal tape according to another embodiment of the invention having a smoke generator identical to that shown in Figure 1; however, the signal tape does not have the ignition spring attached to the igniter portion of the smoke generator nor does it have the sinusoidal core material of Figure 1.
Figure 27 shows a side view of the signal tape shown in Figure 26 from the perspective of arrows C - C as shown in Figure 26.
Figure 28 shows a section of signal tape having multiple smoke generators as shown in Figure 26 connected in a series configuration with extra core material and the ignition spring shown in Figures 1 - 5 is included in this embodiment of the signal tape.
Figure 29 shows a section of signal tape similar to that shown in Figure 24 with smoke generators similar to those shown in Figure 26 and with extra core material.
Figure 30 shows a section of signal tape similar to that shown in Figure 25 but without the sinusoidal core material shown in Figure 25.
Figure 31 shows a section of signal tape similar to that shown in Figure 28 but without the extra core material shown in Figure 28 and with the ignition spring similar to that shown in Figure 1.
Figure 32 shows a section of signal tape similar to that shown in Figure 29 but without the extra core material shown in Figure 29.
Figure 33 shows a cross-section of another embodiment of a smoke generator useful for this invention.
Figure 34 shows a cross-section of a smoke generator according to the invention similar to that shown in Figure 33 but with an ignition spring included.
Figure 35 shows a cross-section of another embodiment of smoke generator useful for this invention with the ignition elements offset to one side of the smoke generator tube.
Figure 36 shows a cross-section of the smoke generator shown in Figure 35 but with an ignition spring included.
Figure 37 shows a cross-section of another embodiment of smoke generator useful for this invention.
Figure 38 shows across-section of the smoke generator of Figure 37 but with an ignition spring included.
Figure 39 shows a smoke generator similar to those shown in Figures 33 - 38 attached to a fabric core material.
Figure 40 shows a smoke generator similar to those shown in Figures 33 - 38 attached to a fabric core material in a different manner than the attachment shown in Figure 39.
Figure 41 shows a smoke generator similar to those shown in Figures 33 - 38 attached to a fabric core material in a different manner than the attachments shown in Figure 39 or Figure 40.
Figure 42 shows a smoke generator similar to those shown in Figures 33 - 38 attached to a chock cord core material in a similar manner than the attachments shown in Figure 39.
Figure 43 shows a signal tape with smoke generators similar to those shown in Figure 40 connected in series with extra fabric core material in a sinusoidal pattern.
Figure 44 shows a signal tape with smoke generators similar to those shown in Figure 41 connected in series with extra fabric core material in a sinusoidal pattern.
Figure 45 shows a signal tape with smoke generators similar to those shown in Figure 41 connected in series with extra fabric core material in a coil pattern.
Figure 46 shows a signal tape with smoke generators similar to those shown in Figure 41 connected in series with no extra fabric core material between the smoke generators.
Figure 47 shows a signal tape with smoke generators similar to those shown in Figure 40 connected in series with extra fabric core material in a coil pattern.
Figure 48 shows a signal tape with smoke generators similar to those shown in Figure 40 connected in series with no extra fabric core material between the smoke generators.
Figure 49 shows a signal tape with smoke generators similar to those shown in Figure 42 connected in series with shock cord core material.

### DETAILED DESCRIPTION OF THE INVENTION

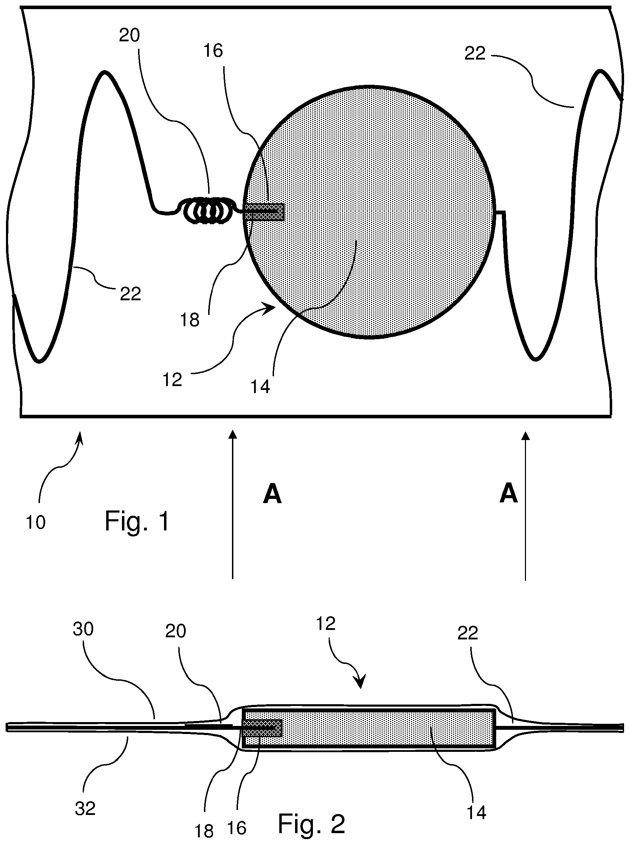

Figures 1 and 2 will be described together with it being understood that some reference numerals shown in one figure may not be shown in the other figure. Figure 1 shows a section of a first embodiment of signal tape **10** with a single smoke generator **12.** Smoke generator **12** comprises a conventional smoke generating composition **14** with an igniter portion **16.** Ignition wire **18** is embedded in igniter portion **16** and will cause igniter portion **16** to ignite when ignition wire **18** is pulled out of igniter portion **16.** Connecting wires **22**, which may be 1/16 inch braided wire cable, attach the smoke generators together. As is clearly shown in Figures 1, 3, 4, and 5, connecting wires **22** are provided in a sinusoidal pattern between smoke generators **12.** This is to provide extra wire to aid in bringing smoke generators **12**_to the surface when the signal tape is struck by construction equipment. Connecting wire **22** is attached to one end of ignition spring **20** while the other end of ignition spring **20** is attached to ignition wire **18.** Thus, when wire **22** is snagged by excavation equipment, ignition wire **18** will be pulled out of igniter portion **16** causing the smoke generator to be activated. Ignition spring **20** is designed to provide a more even pull on ignition wire **18** to secure more consistent activation of smoke generator **12** in accord with the disclosure of the above-mentioned, commonly-owned U.S. patent application 14/318,127, now US 9,732,883. It has been found that if the pull exerted on connecting wire **22** by the excavation equipment is slow enough, the ignition wire **18** may be slowly pulled out of igniter portion **16** without igniting the igniter portion **16.** To prevent this situation, ignition spring **20** has been placed between ignition wire **18** and connecting wire **22.** Even a slow pull on connecting wire **22** will now serve to stretch ignition spring **20** and cause it to store energy. Eventually the stored energy in ignition spring **20** will overcome the inertia and friction between igniter portion **16** and ignition wire **18.** At this point, the stored energy in ignition spring **20** is released and ignition wire **18** is smoothly and swiftly pulled from igniter portion **16** causing ignition of igniter portion **16** and thus, ignition of smoke generator **12.** The entire assembly is encased between two sheets **30** and **32** of plastic tape. Figure 2 shows a cross-section of signal tape **10** and shows sheets **30** and **32** which may be a known thermoplastic material resistant to soil and soil chemicals. Sheets **30** and **32** enclose all of the elements of the signal tape in a protective sleeve.

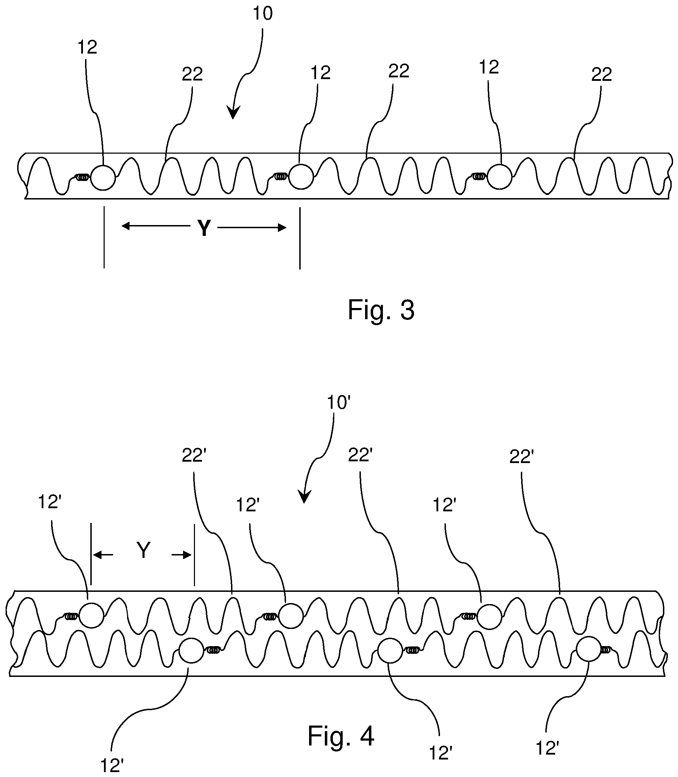

Figure 3 shows a longer section of signal tape **10** having an array of multiple smoke generators **12** contained therein comprising a series configuration signal tape. Smoke generators **12** are connected by wire **22.** The drawings are not made to exact scale. It is to be noted that the smoke generators **12** are intended to be spaced along the length of signal tape **10** at approximately three foot intervals. This is illustrated in Figure 3 by spacing arrow **Y** and it is intended that the separation distance denoted by arrow **Y** is to be approximately 3 feet. It has been found that a three foot spacing works well, but smoke generator spacings of approximately 8 feet have also been used with good results. It is to be understood that the spacing **Y** could be more or less than three feet according to the exact situations encountered in the field and/or economics, since the spacing of the smoke generators [and, thus, the total number of smoke generators in a given length of signal tape] is one of the principle determinants of the unit cost of the signal tape.

Figure 4 shows a section of a second embodiment of signal tape **10'** having two arrays comprising multiple smoke generators **12'** connected in a series configuration. Smoke generators **12'** are connected by wire **22'.** The upper array in Figure 4 is shown with the igniter portions on the left-hand side of smoke generators **12'.** The lower array in Figure 4 is shown with the igniter portions on the righthand side of smoke generators **12'.** The two arrays of interconnected smoke generators are encased within two sheets of plastic tape as shown in Figure 2. This arrangement gives a more reliable signal.

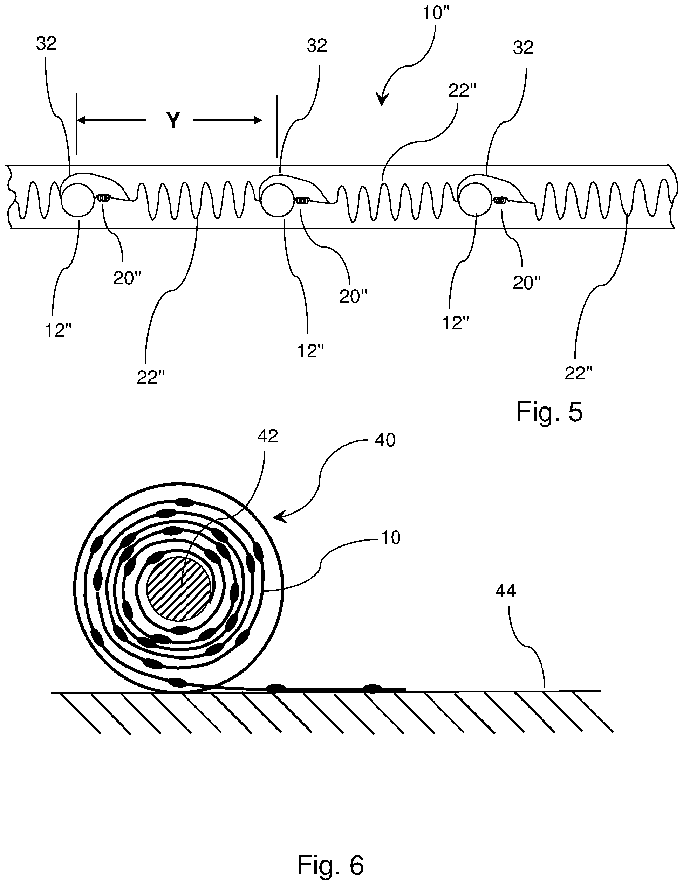

Figure 5 shows a section of a third embodiment of signal tape **10".** The smoke generators **12",** ignition springs **20"** and connecting wires **22"** are all identical to those shown in Figures 1 - 4. Bridge wire **32** connects the separate connecting wires **22"** together in one continuous string. This provides a continuous electrical pathway for detection in the conventional manner when the signal tape is buried near the underground infrastructure it is designed to protect. Wires **22"** and **32** may be braided for strength or they may be solid. They may be conductive or non-conductive. If conductive, wires **22"** and **32** may be used with known systems and devices to locate a buried conductive wire. Bridge wire **32** also provides extra strength to the array. As in the other signal tape embodiments smoke generators **12"** are shown as being spaced at three foot intervals [**Y**] along signal tape **10".** This interval is considered suitable for the purposes of the invention, but, as noted above in § **[0064]** , this interval could be greater or less than three feet, as desired [for example, 8 feet] or as mandated by field conditions and/or economics.

Figure 6 shows a spool **40** with a large quantity of signal tape **10** wrapped around spindle **42.** The signal tape is shown as being partially unwound and lying on the ground surface **44.** This figure illustrates how a large quantity of signal tape could be stored and transported to the field to be buried near an underground infrastructure in order to protect same.

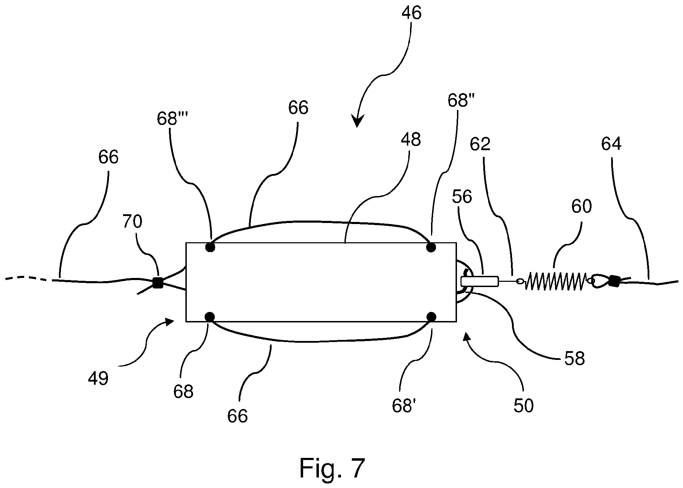

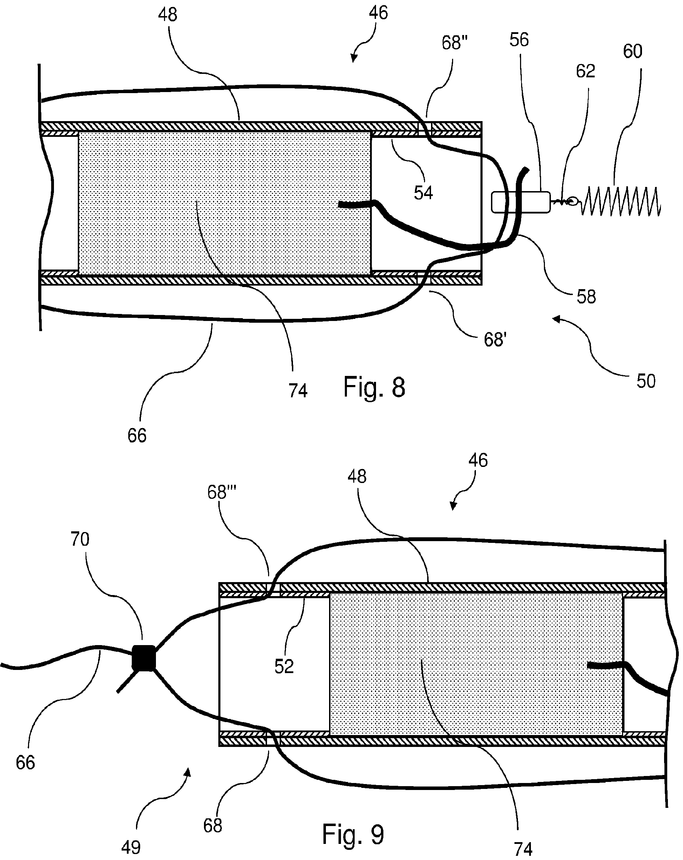

Figure 7 shows a second embodiment of a smoke generator **46** intended to be used in a series configuration signal tape according to the invention. Smoke generator **46** comprises a heavy cardboard tube **48** which has a proximal end **49** and a distal end **50.** It has been found in field testing that wire **66** has a tendency to be pulled out of tube **48** during use. This may cause smoke generator **46** to remain in the ground and not be pulled to the surface by excavation equipment. To prevent this possibility, it has been found useful to reinforce one or both ends of tube **48.** Both proximal end **49** and distal end **50** of tube **48** are reinforced by having a smaller cylinder [**52, 54**] slid inside each of the tube ends [**49, 50**]. This construction is shown in Figures 8 and 9. Friction igniter **56** is positioned at distal end **50** of tube **48** and receives a free end of fuse **58.** Ignition wire **62** has one end inserted within friction igniter **56** and the other end is attached to one end of ignition spring **60.** The other end of ignition spring **60** is attached to wire cable **64.** Wire cable **66** is looped through holes **68**, **68'** in tube **48** and then passes through a hole in friction igniter **56** and then back through holes **68"** and **68"'** in tube **48** and is crimped to itself by crimp **70.** Wire cables **64** and **66** may be made from 1/16 inch braided cable or any other suitable material. It should be noted that holes **68** and **68"'** and holes **68'** and **68"** are actually approximately 180° apart on the surface of tube **48** as shown in Figures 8 and 9. They are shown in Figure 7 as being closer together than 180° to better illustrate the invention.

Figure 8 shows a cross-section of the distal portion of the smoke generator shown in Figure 7. The distal end **50** of generator **46** is shown in Figure 8. Tube **48** (which may be a heavy cardboard tube) contains the smoke producing compound **74** in the central area thereof and tube **48** is reinforced by having cylinder **54** slid inside the distal end of tube **48.** It has been found through field testing that wire **66** can be pulled completely out of tube **48** by the forces exerted by excavation equipment. Therefore, one or both ends of tube **48** are reinforced to prevent this. The relative sizes of tube **48** and cylinder **54** are selected such that cylinder **54** is tightly received within tube **48.** Wire cable **66** is shown passing through hole **68'** and then passing through a hole [not shown] in igniter **56.** Wire **66** then passes back through hole **68"** and returns to the proximal end **49** of tube **48.** One end of fuse **58** is embedded within smoke producing compound **74** and the other end passes through a hole [not shown] in igniter **56** such that when igniter **56** is actuated, fuse **58** is lit and burns back to ignite smoke producing material **74.** One end of ignition wire **62** is embedded within friction igniter **56** and the other end is attached to ignition spring **60.** As noted below in § **[0083]**, the purpose of ignition spring **60** is to provide more reliable ignition of friction igniter **56** in the operation of the signal tape. It has been found that a direct connection between ignition wire **62** and wire cable **64** is not the best system for producing reliable ignition of friction igniter **56.** Thus ignition spring **60** was introduced into the system to provide for rapid and smooth withdrawal of ignition wire **62** from friction igniter **56**, as explained below in § **[0083].**

Figure 9 shows a cross-section of the proximal portion of the smoke generator shown in Figure 7. The proximal end **49** of smoke generator **46** is shown in Figure 9. Tube **48** contains the smoke producing material **74** and the proximal end **49** of tube **48** is reinforced by insertion of cylinder **52** therein in the same manner described above in § **[0068]** for the distal end **50** of tube **48.** Wire **66** enters the proximal end of tube **48** and passes through hole **68** in cylinder **52** and tube **48** to the outside of tube **48.** It then runs to the distal end **50** of tube **48** and passes through hole **68'** to the interior of tube **48** as shown in Figure 8 and, after passing through friction igniter **56** passes back to the outside of tube **48** through hole **68".** Wire **66** then extends back to proximal end **49** of tube **48.** There it passes through hole **68"'** to the inside of tube **48** and is crimped to itself by crimp **70.**

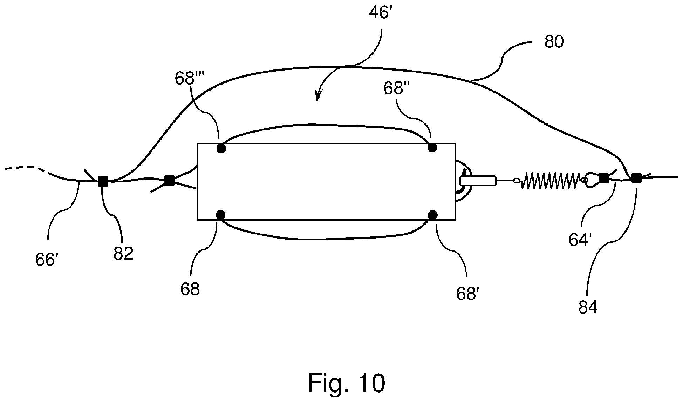

Figure 10 shows a third embodiment of a smoke generator for the signal tape of the invention intended to be used in a series configuration of the signal tape. This embodiment is an improvement of the smoke generator **46** shown in Figure 7. The only difference between the smoke generator **46'** shown in Figure 10 and the smoke generator **46** shown in Figure 7 is the introduction of bridge wire **80.** In field testing it has been found that the embodiment shown in Figure 7 works well if it is wire **66** that is snagged by the excavation equipment. Since wire **66** passes through reinforced tube **48** of the smoke generator **46** twice, the excavation equipment can pull the lit smoke generator out of the ground to the surface. It has been found that if it is wire **64** that is snagged by the excavation equipment, it is possible that smoke generator **46** will not be pulled to the surface. This is because ignition wire **62** is the only connection between wire **64** and smoke generator **46** and ignition wire **62** is often completely removed from friction igniter **56** when wire **64** is snagged by the excavation equipment. Thus, bridge wire **80** was provided and, as shown in Figure 10, is crimped to wire **66'** by crimp **82** and also crimped to wire **64'** by crimp **84.** The addition of bridge wire **80** helps to insure that smoke generator **46'** will be pulled to the surface by the excavation equipment no matter which wire is snagged by the excavation equipment. There is an additional advantage to having bridge wire **80** connected as shown in Figure 10. Wires **64**, **64'**, **66** and **66'** are often made from braided steel cable, which is conductive. If bridge wire **80** is also conductive, it provides a continuous conductive path throughout the length of the signal tape, permitting the signal tape to be electronically detected by any conventional and known detecting device. It should be noted that holes **68** and **68"'** and holes **68'** and **68"** are actually approximately 180° apart on the surface of tube **48** as shown in Figures 8 and 9. They are shown in Figure 10 as being closer together than 180° to better illustrate the invention. It is also to be noted that there has to be enough slack in bridge wire **80** such that the ignition wire can be pulled out of smoke generator **46'** when the wires **66'** or **64'** are snagged by excavation equipment.

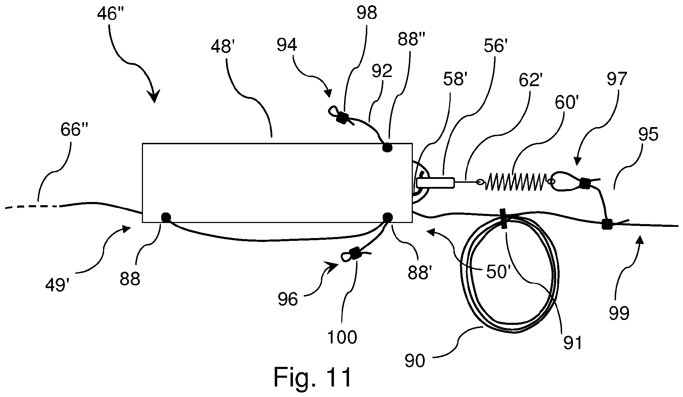

Figure 11 shows a fourth embodiment of a smoke generator **46"** for the signal tape of the invention intended to be used in a series configuration of the signal tape. This embodiment is an improvement over that shown in Figure 10. In field testing, it has been found that even the provision of bridge wire **80** sometimes fails to ensure that the lit smoke generator **46'** would be pulled to the surface by the excavation equipment. Breaks sometimes occurred at the crimped joints produced by crimps **82** and **84** causing smoke generator **46'** to be left in the ground. Thus, it was decided to make wire **66'** a continuous cable with no crimped joints and connecting all of the smoke generators in the series configuration of the signal tape. Continuous wire **66"** passes inside the distal end **49'** of tube **48'** and then through hole **88** to the outside of smoke generator **46".** The wire passes along the length of tube **48'** to the distal end **50'** of the smoke generator and then passes back inside tube **48'** through hole **88'.** Approximately 3 feet of continuous wire **66"** is then looped together at **90** with zip tie **91** and then continuous wire **66"** continues on to the next smoke generator in the series string.

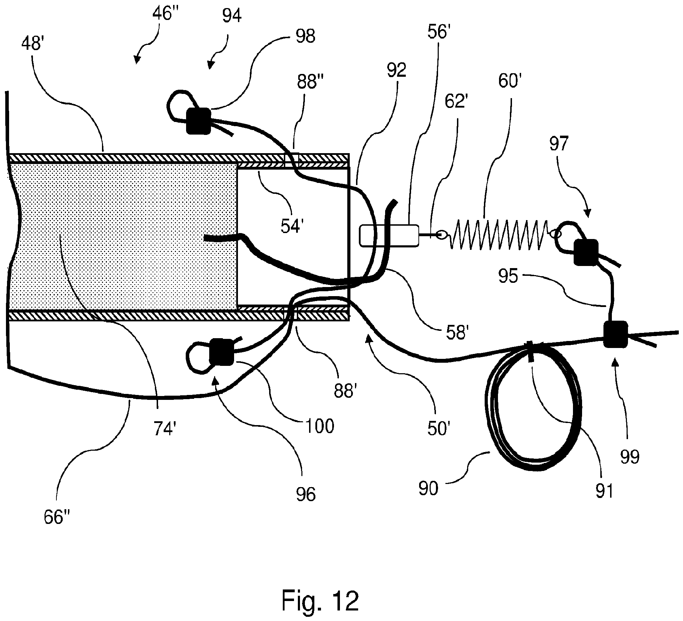

Since continuous wire **66"** does not travel up through the tube **48'** and out of the top hole **88"** in this configuration, some means must be provided to hold friction igniter **56'**, ignition wire **62'** and ignition spring **60'** in position during operation of smoke generator **46".** This is accomplished by providing a separate wire **92** at the distal end **50'** of tube **48'** running from the top of smoke generator **46"** [as shown in Figure 11] through hole **88"** and into the interior of tube **48'.** The wire proceeds out of distal end **50'** and passes through a hole [not shown] in igniter **56'.** It then passes back inside distal end **50'** and through hole **88'.** Wire **92** is looped at each end **94** and **96** and crimped to itself by crimps **98, 100.** It should be noted that holes **88'** and **88"** are actually approximately 180° apart on the surface of tube **48'** as shown in Figures 12. They are shown in Figure 11 as being closer together than 180° to better illustrate the invention.

In the embodiment shown in Figure 11, wire **66"** is now continuous and connects all of the smoke generators in the series configuration signal tape, therefore, wire **64'** as shown in Figure 10 has been eliminated and there is nothing to attach to ignition spring **60'** to activate the smoke generator. Thus, wire **95** has been provided to pull on the ignition spring **60'** when the signal tape is struck by excavation equipment and to thus activate [ignite] smoke generator **46".** Wire **95** is attached to the free end of ignition spring **60'** at **97** and to wire **66"** at **99.**

Figure 12 shows a cross-section of the smoke generator **46"** shown in Figure 11. The distal portion **50'** of smoke generator **46"** is shown with tube **48',** reinforcement cylinder **54'** and holes **88'** and 88". Friction igniter **56'**, fuse **58'**, ignition wire **62'**, ignition spring **60'**, continuous wire **66"**, cable loop **90**, zip tie **91**, wire **92**, ends **94** and **96** and crimps **98** and **100** are all shown the same as they are in Figure 11, just at a larger scale. Smoke producing material **74'** is shown in the interior of tube **48'.** Wire **95** is also shown attaching the free end of ignition spring **60'** to the continuous wire **66"** as in Figure 11.

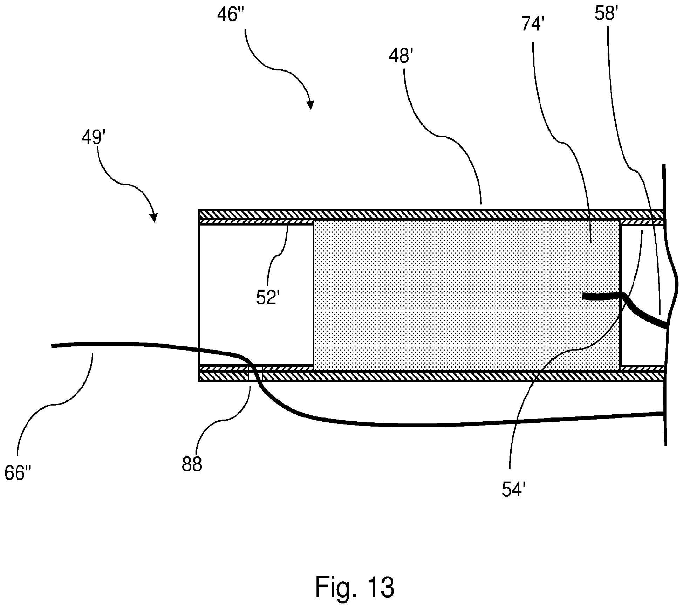

Figure 13 shows a cross-section of the proximal portion **49'** of smoke generator **46"** shown in Figure 11. Tube **48'**, smoke producing material **74'**, reinforcement cylinders **52'** and **54'** and fuse **58'** are all shown. Wire **66"** and hole **88**, are also shown as they are shown in Figure 11, except for the fact that hole **88** is shown in the bottom of tube **48'** and not exactly as shown in Figure 11. As noted above for Figures 7, 10 and 11, the holes in tube **48** and **48**' are not shown in the figures as being diametrically opposed, yet they are diametrically opposed as shown in Figures 8, 9 and 12. This has been done to better illustrate the inventive smoke generator in Figures 7, 10 and 11.

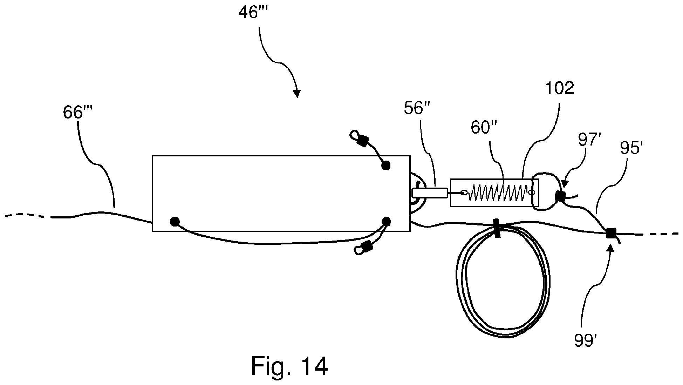

Figure 14 shows a fifth embodiment of a smoke generator **46"'** for the signal tape of the invention intended to be used in a series configuration of the signal tape. This embodiment is an improvement of the smoke generator **46"** shown in Figure 11. The only difference between the smoke generator **46"'** shown in Figure 12 and the smoke generator **46"** shown in Figure 11 is the introduction of protective cover **102.** Wire **95'** which connects ignition spring **60"** to continuous wire **66"'** is made to have a slightly larger loop at **97'** to pass through holes [not shown] in protective cover **102** and also through the free end of ignition spring **60".** Wire **95'** is crimped to continuous wire **66"'** at **99'.**

In the embodiments shown in Figure 7, 8, 10, 11, 12 and 14 the fuse and the support wire for the friction igniter are shown as passing through different holes in the friction igniter. It is noted that this is not an absolute necessity since the support wire can be passed through the same hole in the igniter as the fuse.

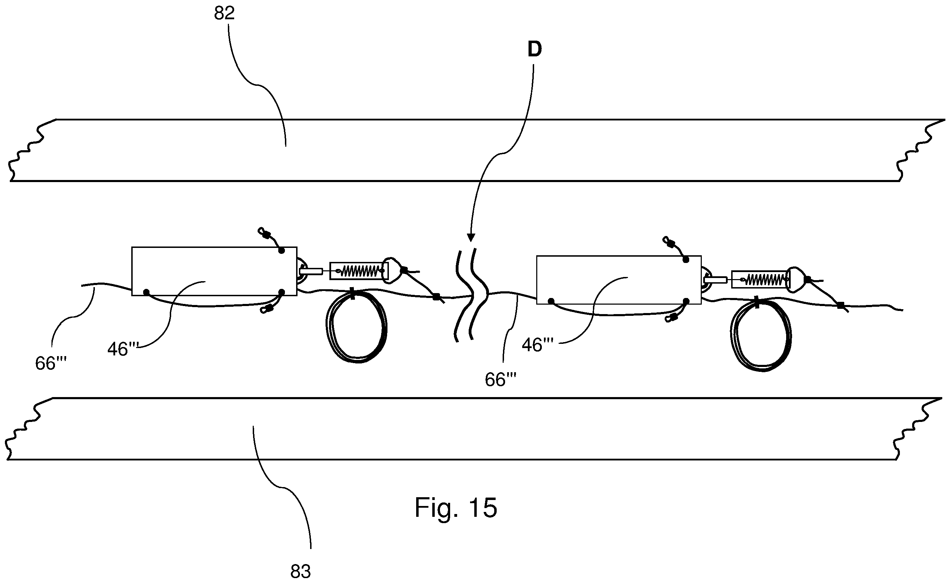

Figure 15 shows a section of a series configuration signal tape according to this invention having multiple smoke generators identical to those shown in Figure 14. A series of smoke generators **46"'** would be encapsulated with two layers of tape **82** and **83** to create the inventive signal tape. The two tapes **82**, **83** are joined or sealed so as to fully encase and protect smoke generators **46"'**, and all the components of the smoke generators. The tapes **82**, **83** may be in the form of tape or any other form of casing which is long and thin but sufficiently robust to provide an environmental barrier as well as withstand the forces of installation. Smoke generators **46"'** may be aligned along the tape to allow for the tape to be rolled up for compact storage [as shown in Figure 6] and installation in the same manner as marker tape is currently installed above a buried infrastructure. Tapes **82**, **83** must be fully sealed and must provide an impermeable environmental barrier to water and other underground fluids and must provide a protective layer able to withstand the forces of installation and backfill during installation so that smoke generators **46"'** and all of their components remain fully protected and operable *in situ.* As shown by break marks **D,** smoke generators **46"'** are not as close together as is shown in Figure 15 but would actually be separated by a distance previously shown in Figures 3 - 5 as **Y** which might vary from 3 to 8 feet or more as discussed above in § **[0064]** and § **[0066]**.

In operation, a series of smoke generators would be encapsulated with two layers of tape to create the inventive signal tape and then buried underground near an underground infrastructure. This construction is illustrated in Figure 15 and discussed above in § **[0078]** The two tapes **82**, **83** are joined or sealed so as to fully encase and protect smoke generators **46"**, ignition spring **60'**, friction igniter **56'**, ignition wire **62'** and wires **64** and **66.** Smoke generators **46** may be aligned along the tape to allow for the tape to be rolled up for compact storage [as shown in Figure 6] and installation in the same manner as marker tape is currently installed above a buried infrastructure. Tapes **82**, **83** enable the system to be rolled up for transportation and unrolled for installation. Note that tapes **82**, **83** shown in Figure 15 above and below smoke generators **46"'** are laminated together or otherwise fixed together to fully encapsulate the smoke generators **46** and all connecting wires, etc. and other components of the signal tape.

The inventive signal tape is intended to be buried in close proximity to but not touching a pipeline or other buried infrastructure. It may run parallel to the buried infrastructure or be deployed in a serpentine pattern parallel to an above the buried infrastructure. In certain situations, it may be desirable to emplace two signal tapes above a buried pipeline or other infrastructure with one tape running parallel to and to the left of the buried infrastructure and the other tape running parallel to and to the right of the buried infrastructure.

The smoke generators are connected together with wire continuous wire cable **66"'** and spaced approximately 3 feet apart along the length of the signal tape although, as noted above, they could be closer or farther apart [for example, 8 feet]. For example a relatively shallow burial depth for the signal tape coupled with fairly loose soil might allow for a longer spacing of smoke generators. Conversely, a deeper burial depth coupled with fairly compact or rocky soil might necessitate a closer spacing for the smoke generators.

When the buried signal tape is struck by an excavation tool such as a backhoe bucket or scoop, continuous wire cable **66"'** is snagged by the excavation tool. Whether wire **66"'** is snagged at the distal end of smoke generator **46"'** by the excavation tool or snagged at the proximal end of the smoke generator, this will cause the ignition spring **60** to stretch and store energy. Ignition wire **62'** activates friction igniter **56'** through friction as ignition wire **62'** is pulled from friction igniter **56'.** The spring constant for ignition spring **60'** is selected such that the initial stretching of ignition spring **60'** will not create enough force on ignition wire **62'** to cause ignition wire **62'** to move within friction igniter **56'.** As motion of the excavator tool continues to exert more force on wire **66"'**, ignition spring **60'** will continue to stretch and store energy until it exerts sufficient force upon ignition wire **62'** to overcome the inertia and friction of the ignition wire - igniter combination and ignition wire **62'** will start to move within friction igniter **56'.** At this point the stored energy in ignition spring **60'** will cause ignition wire **62'** to rapidly and smoothly move out of friction igniter **56'** thus activating [igniting] friction igniter **56'** and lighting fuse **58'.** Fuse **58'** will ignite the smoke producing material **74'** inside tube **48'.** As the excavation tool continues to move to the ground surface, the now lit smoke generator **46"** will be pulled from the ground releasing a cloud of smoke at the surface thus providing a vivid signal of impending danger easily seen by the excavation equipment operator. Since the lit smoke generator may well be contained in the excavation bucket, it will appear to the operator that the smoke is coming from his own equipment. As noted above, this sort of signal cannot be misinterpreted and intuitively warns of danger.

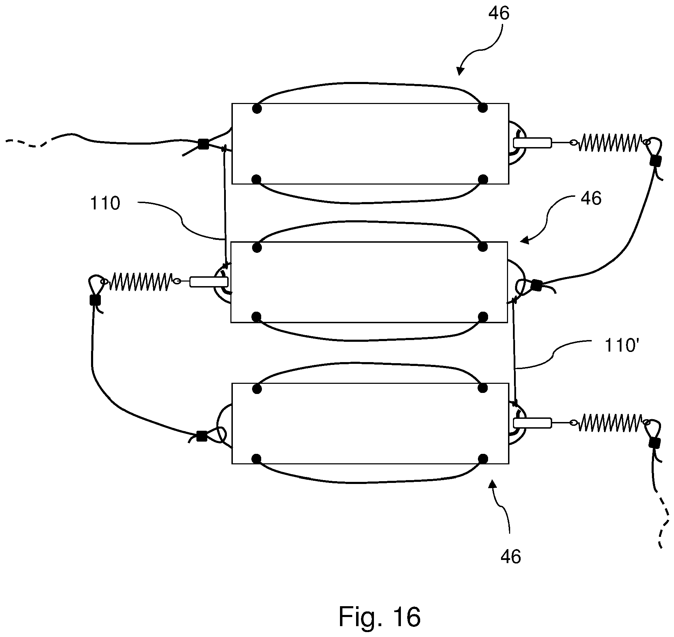

Figure 16 shows a first embodiment of a smoke generator intended to be used in a ladder configuration signal tape. Smoke generators **46** are identical to those shown in Figure 7. They are connected together by fishing line **110** and **110'** into a ladder configuration. The smoke generators would be emplaced between two tapes similar to tapes **82** and **83** as shown in Figure 15. The spacing between the individual smoke generators **46** would be approximately 3 feet, although - - as noted above - - it could be greater [for example, 8 feet] or smaller, as desired.

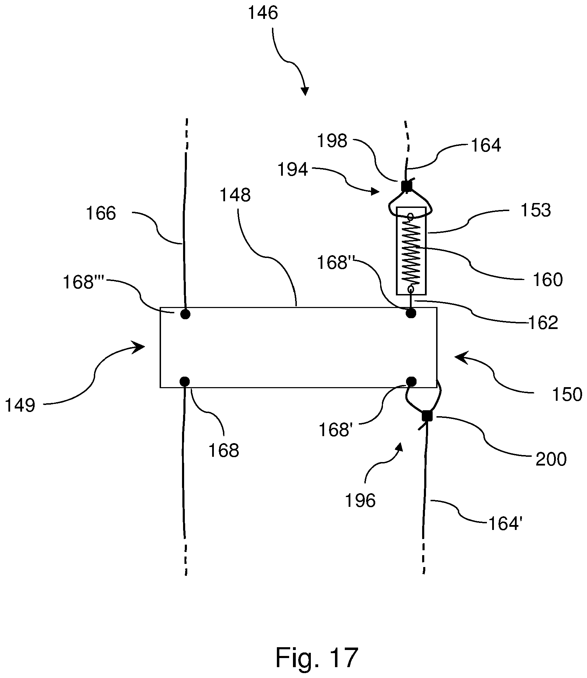

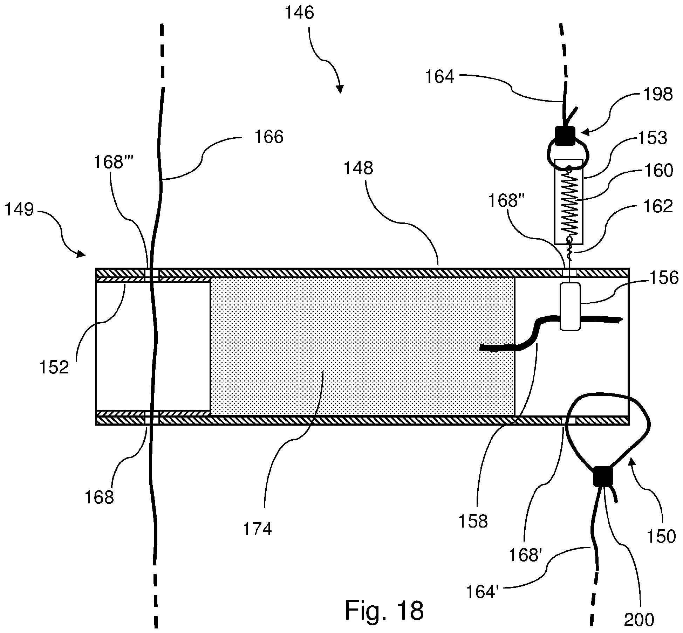

Figure 17 shows a second embodiment of a smoke generator intended to be used in a ladder configuration signal tape. Figure 18 shows a cross-sectional view of the smoke generator **146** of Figure 17. These two figures will be described together with it being understood that some elements will be visible in one figure and not in the other. Smoke generator **146** comprise a tube **148** [which may be heavy cardboard] with proximal **149** and distal **150** ends. Tube **148** contains the smoke producing material **174.** Holes **168** and **168"'** are bored through tube **148** near the proximal end of tube **148.** Holes **168'** and **168"** are bored through tube **148** near the distal end thereof. Reinforcing cylinder **152** is emplaced within the proximal end **149** of tube **148.** It has been found that, with this configuration, a reinforcing cylinder is not necessary on the distal end of tube **148.** Holes **168** and **168"'** extend through tube **148** and reinforcing cylinder **152.** As noted above for Figures 7, 10, 11, 14, 15 and 16, the holes in tube **148** are not shown in Figure17 as being diametrically opposed, yet they are diametrically opposed as shown in Figures 8, 9, 12, 13 and 18. This has been done to better illustrate the inventive smoke generator in Figures 7, 10, 11, 14, 15 and 16.

Continuous wire **166** passes through holes **168** and **168"'** at the proximal end **149** of smoke generator **146** and continues on to the next smoke generator in the string. Fuse **158** has one end thereof embedded within smoke producing material **174** and the other end threaded through a hole [not shown] in friction igniter **156.** Friction igniter **156** is contained within the distal end **150** of tube **148** near hole **168".** Ignition wire **162** has one end thereof embedded within friction igniter **156** while the middle portion of ignition wire **162** passes outside tube **148** through hole **168".** The other end of ignition wire **162** is attached to one end of ignition spring **160.** Ignition spring **160** is covered by protective cover **153.** Wire **164** is looped through holes [not shown] in protective cover **153** and through the free end of ignition spring **160.** Wire **164** is then crimped to itself at **194** by crimp **198.** Wire **164'** passes through hole **168'** near the distal end of tube **148,** passes outside of tube **148** and is looped back around and connected to itself at **196** by crimp **200.**

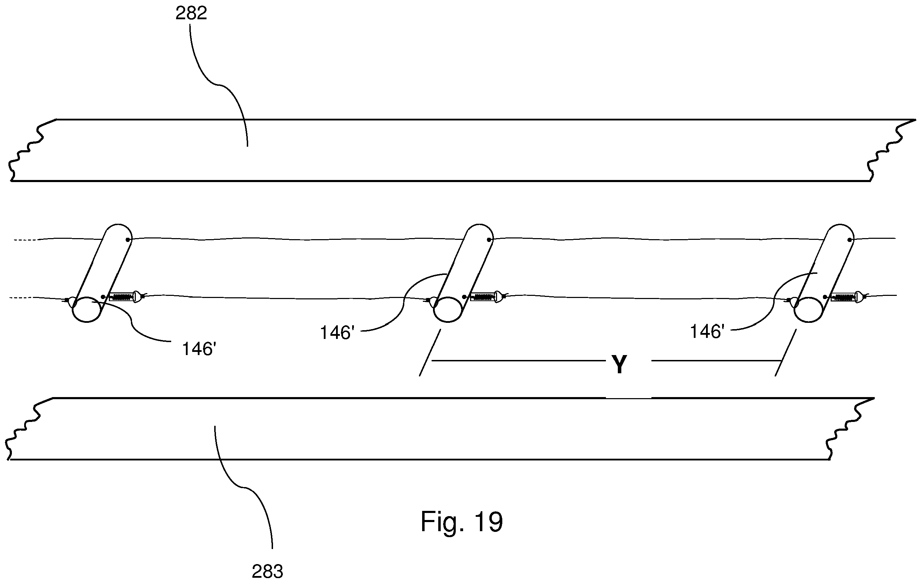

Figure 19 shows a section of a ladder configuration signal tape according to this invention having multiple smoke generators **146'** identical to smoke generator **146** shown in Figures 17 and 18. A series of smoke generators **146'** would be encapsulated with two layers of tape **282** and **283** to create the inventive signal tape. As shown in Figure 19, the distance **Y** between smoke generators **146'** may be 3 feet, or greater than 3 feet or less, as discussed *supra.* The two tapes **282, 283** are joined or sealed so as to fully encase and protect smoke generators **146'**, and all the components of the smoke generators. The tapes **282**, **283** may be in the form of tape or any other form of casing which is long and thin but sufficiently robust to provide an environmental barrier as well as withstand the forces of installation. Smoke generators **146'** may be aligned along the tape to allow for the tape to be rolled up for compact storage [as shown in Figure 6] and installation in the same manner as marker tape is currently installed above a buried infrastructure. Tapes **282, 283** must be fully sealed and must provide an impermeable environmental barrier to water and other underground fluids and must provide a protective layer able to withstand the forces of installation and backfill during installation so that smoke generators **146'** and all of their components remain fully protected and operable *in situ.*

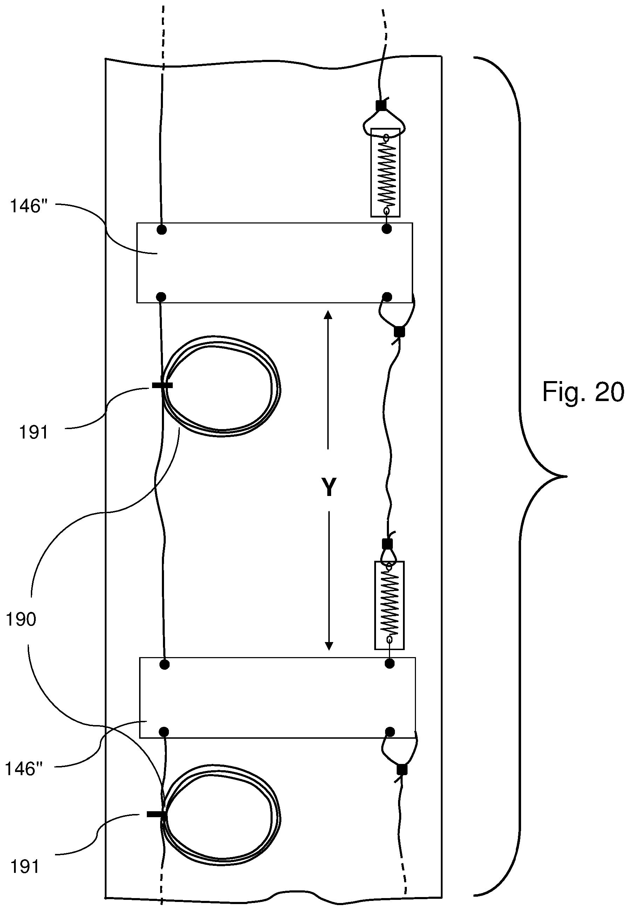

Figure 20 shows two examples of a third embodiment **146"** of the ladder configuration smoke generator connected together in a signal tape according to the invention. The only difference between smoke generators **146"** and the smoke generator **146** shown in Figures 17 and 18 is the addition of looped cable **190.** It is noted that all of the wire cables shown in this application may be stranded steel cable of approximately 1/16 inch diameter. Looped cable **190** is approximately 3 feet of such cable looped and tied with a zip tie **191.** Smoke generators **146"** are separated by a distance Y in the tape which, as discussed, *supra,* may be approximately 3 feet or more or less, as desired.

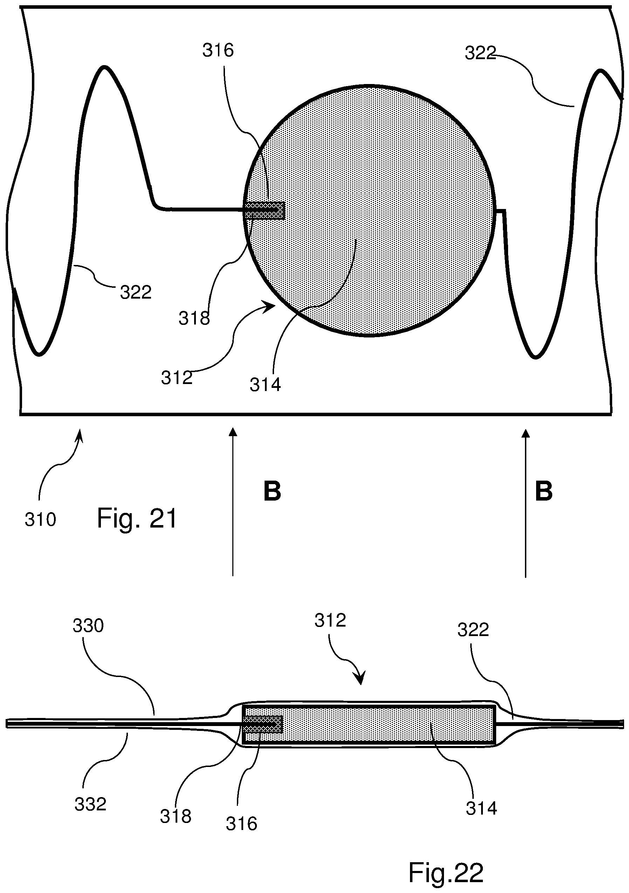

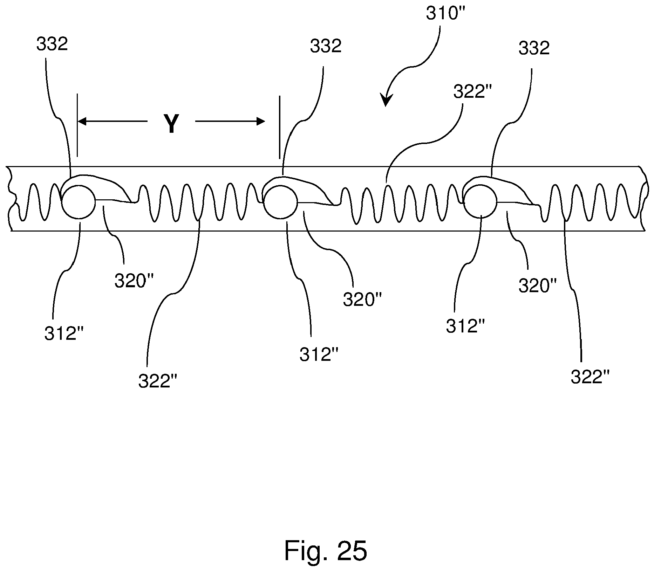

Figures 21 - 25 illustrate another embodiment of the signal tape shown in Figures 1 - 5, *supra,* but without the inclusion of ignition springs. Figures 21 and 22 will be described together and it should be understood that not all figure numerals are shown in each Figure. Signal tape **310** is essentially identical to signal tapes **10**, **10'** and **10"** of Figures 1 - 5 but without ignition springs **20** and **20".** Signal tape **310** has smoke generators **312** therein containing a conventional smoke generating composition **314** with an igniter portion **316** and an igniter wire **318** positioned in igniter portion **316.** Elements **310, 312, 314, 316** and **318** are essentially identical to elements **10**, **12**, **14**, **16** and **18** of Figures 1 - 5. Connecting wire **322** is essentially identical to connecting wire **22** of Figures 1 - 5 except that connecting wire **322** is attached [at the left side of smoke generator **312**] directly to the ignition wire **318** instead of being attached to the ignition spring. Signal tape **310** is completed by thermoplastic sheets **330** and **332** which in a known manner form an environmental barrier for the other components of signal tape **310.** Sheets **330** and **332** may be made from known materials with good resistance to the environment found underground. For example, these known materials are as described in U.S. Patent 3,633,533 issued in 1972 to Gordon H. Allen et al. [hereinafter Allen '533]. Allen '533 disclosed an early example of marker tape comprising a thin plastic film which may be made, for example, of polyethylene or polypropylene or polyvinylidene chloride [e.g. Saran™] or a fluorocarbon. Sheets **330** and **332** may be comprised of the foregoing materials and further comprise a film which may have a thickness of about 0.001 to 0.002 inch.

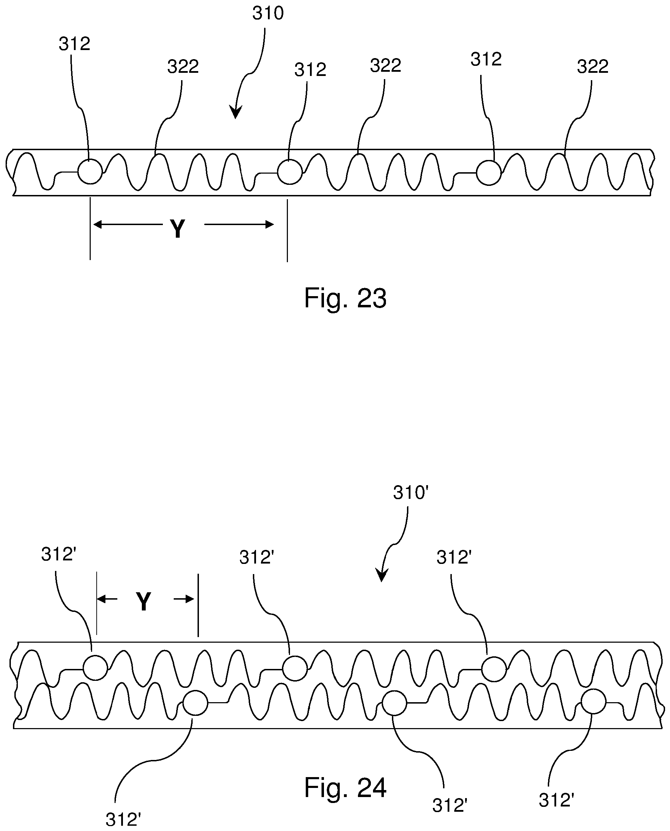

Figures 23 - 25 show signal tapes that are essentially identical to those of Figures 3 - 5 except that signal tapes **310**, **310'** and **310"** do not have any ignition springs contained therein. Similar numbers in Figures 23 - 25 to those in Figures 1 - 5 show the same elements. For example, smoke generators **312** of Figures 23 - 25 are essentially identical to smoke generator **12** of Figures 1 -5.

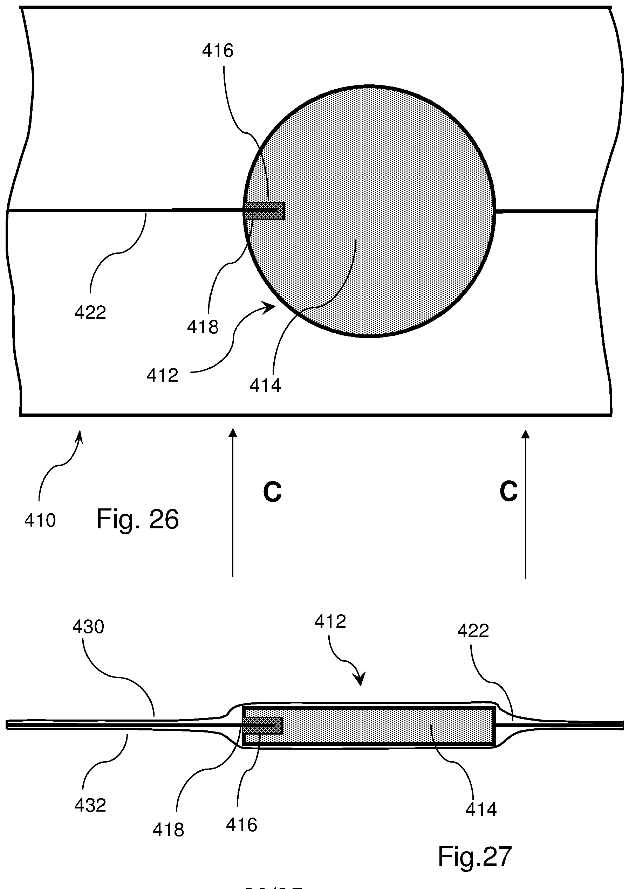

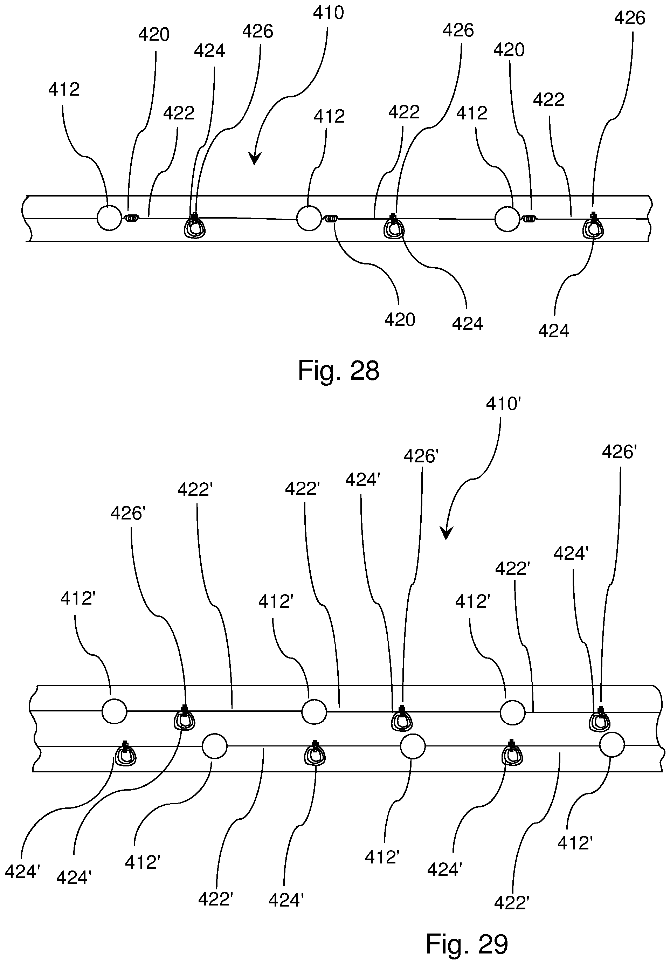

Figures 26 - 30 illustrate another embodiment of the signal tape shown in Figures 1 - 5, *supra,* but without the inclusion of ignition springs. It should be understood that the signal tape of this embodiment can utilize ignition springs as shown in Figures 1 - 5 and as shown in Figure 28 or the ignition springs may be omitted as shown in Figures 26, 27 29 and 30. In addition, the connecting wires **422**, **422'** and **422"** unlike the showings of Figures 1 - 5 are not arrayed in a sinusoidal configuration in Figures 26 - 30 but are essentially straight. Figures 26 and 27 will be described together and it should be understood that not all figure numerals are shown in each Figure. Signal tape **410** has smoke generators **412** therein containing a conventional smoke generating composition **414** with an igniter portion **416** and an igniter wire **418** positioned in igniter portion **416.** Elements **410**, **412**, **414**, **416** and **418** are essentially identical to elements **10**, **12**, **14**, **16** and **18** of Figures 1 - 5. Connecting wire **422** as shown in Figures 26, 27 and 28 is essentially identical to connecting wire **22** of Figures 1 - 5 except that connecting wire **422** is attached [at the left side of smoke generator 4**12**] directly to the ignition wire **418** instead of being attached to the ignition spring and connecting wires **422**, **422'** and **422"** are straight and do not have the sinusoidal configuration shown in Figures 1 - 5 . Signal tape **410** is completed by thermoplastic sheets **430** and **432** which in a known manner form an environmental barrier for the other components of signal tape **410.** Sheets **430** and **432** may be made from known materials with good resistance to the environment found underground. For example, these known materials are as described in U.S. Patent 3,633,533 issued in 1972 to Gordon H. Allen et al. [hereinafter Allen '533]. Allen '533 disclosed an early example of marker tape comprising a thin plastic film which may be made, for example, of polyethylene or polypropylene or polyvinylidene chloride [e.g. Saran™] or a fluorocarbon. Sheets **430** and **432** may be comprised of the foregoing materials and further comprise a film which may have a thickness of about 0.001 to 0.002 inch.

Figure 28 illustrates an embodiment of the inventive signal tape very similar to that shown in Figure 3 except that signal tape **410** does not have connecting wire **422** arrayed in sinusoidal configuration. Signal tape **410** does have ignition springs **420** as shown similar to ignition springs **20** shown in Figures 1 - 5. As noted above, connecting wires **422** are essentially straight and have collected bundles of extra wire **424** attached between smoke generators **412.** Bundles of extra wire **424** are attached to connecting wires **422** by cable ties **426.**

Figure 29 illustrates an embodiment of the inventive signal tape very similar to that shown in Figure 4 except that signal tape **410'** does not have ignition springs and the connecting wires **422'** run straight between smoke generators **412'.** In addition, extra wire **424'** is bundled and attached to connecting wires **422'** by cable ties **426'.**

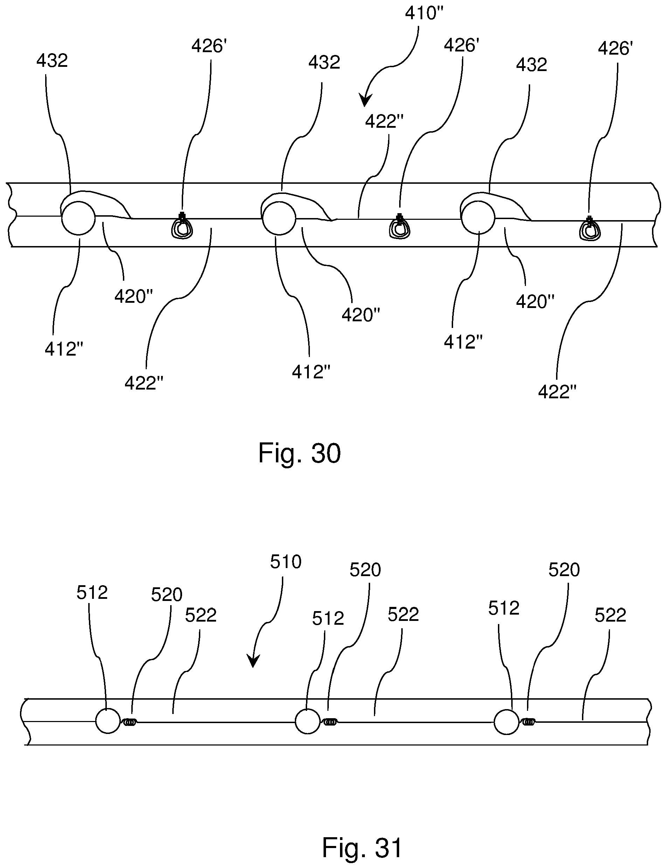

Figure 30 illustrates an embodiment of the inventive signal tape very similar to that shown in Figure 5 except that signal tape **410"** does not have ignition springs and the connecting wires **422"** run straight between smoke generators **412".** In addition, extra wire **424"** is bundled and attached to connecting wires **422"** by cable ties **426".**

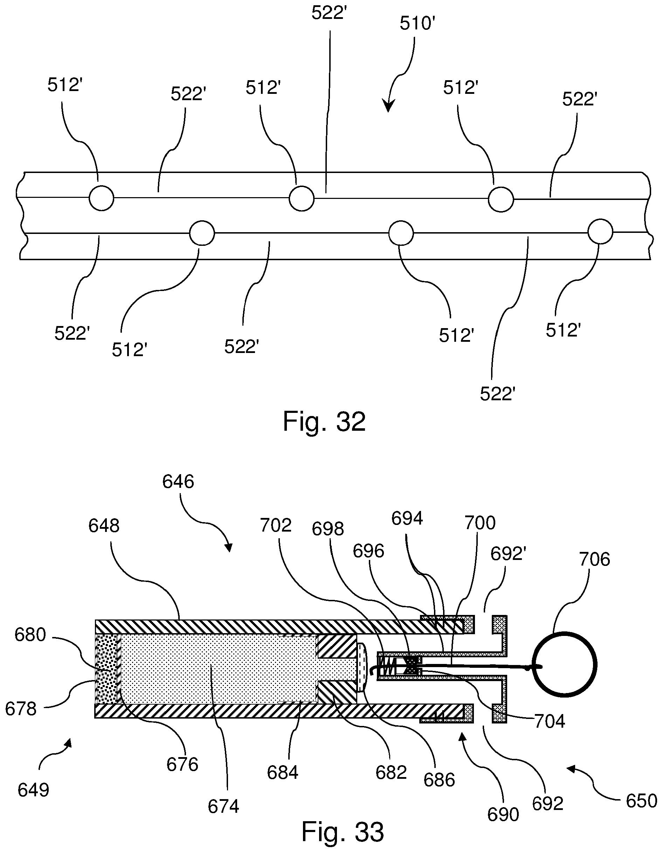

Figures 31 and 32 illustrate an embodiment of the inventive signal tape very similar to that shown in Figures 3 and 4 except that signal tape **410"** does not have ignition springs and the connecting wires **422"** run straight between smoke generators **412".** No extra wire is bundled and attached to connecting wires **422"** in this embodiment. However, it should be noted that the signal tape of this embodiment may or may not utilize ignition springs. Optional ignition springs **520** are shown in signal tape **510** and not show in signal tape **510'.**

Figures 33 - 38 illustrate another embodiment of a smoke generator suitable for use with the inventive signal tape. It should be noted that this smoke generator has a number of common or similar elements to those of smoke generator **46** shown in Figures 7 - 9. Smoke generator **646** shown in Figure 33 comprises a tube **648** which may be made from heavy cardboard. Tube **648** is filled with a known smoke producing compound **674.**

With regard to Figure 33, tube **648** is closed off at the proximal end **649** by cardboard or metal disks **676**, **678** tightly wedged or otherwise fastened to the interior of tube **648.** Earth or sand or a similar inert material **680** is contained within the space between disks **676** and **678** to help contain and control the reaction of smoke producing compound **674.** Annular plug **682** is also mounted in the interior of tube **648** in any known manner to help contain smoke producing compound **674** and to provide a seat for ignition button **686.** Annular sleeve **684** is attached to the interior of tube **648** in any known manner to provide support to annular plug **682.** Sleeve **684** and plug **682** may be attached using adhesive or any appropriate mechanical fasteners. Cap **690** is attached to the distal end **650** of tube **648.** Cap **690** is made of metal, heat-resistant thermoplastic or any other suitable material and serves to control and channel the release of the smoke products produced by the reaction of smoke producing compound **674** and also serves to ignite smoke generator **646** in a manner that will be described below. Cap **690** has two smoke releasing holes **692**, **692'** approximately 180° apart although more such smoke releasing holes [or fewer] may be used, as desired. Cap **690** may be secured to tube **648** by pins **694** as shown, by teeth [not shown in the figures] formed internally of cap **690** which tightly grasp tube **648** or by adhesive [also not shown]. Cap **690** may also be secured to tube **648** in any other conventional manner, as desired.

Cap **690** carries on the interior thereof ignition tube **696** which contains the ignition device for smoke generator **646.** Igniter tube **696** carries igniter striker **698** which receives igniter wire **700.** Ring **706** is attached to the right hand end of igniter wire **700.** Igniter striker **698** is secured within igniter tube **696** through the interaction of spring **702** and annular disk **704.** Spring **702** is secured within the rear end of igniter tube **696** and biases igniter striker **698** towards and against annular disk **704.** Ignition wire **700** is threaded through a hole [not shown] in igniter striker **698** such that when ignition wire **700** is pulled to the right in figure 33 by ring **706**, a shower of sparks is created. This shower of sparks falls on ignition button **686** which then ignites and, in turn, ignites smoke producing composition **674.** The smoke thus produced by the reaction of smoke producing composition **674** rushes out through smoke releasing holes **692**, **692'** because the ignition button **686** which was sealing the hole [not numbered in the figures] in annular disk **682** burns up upon ignition by the shower of sparks -- thus opening the afore-mentioned hole in annular disk **682.**

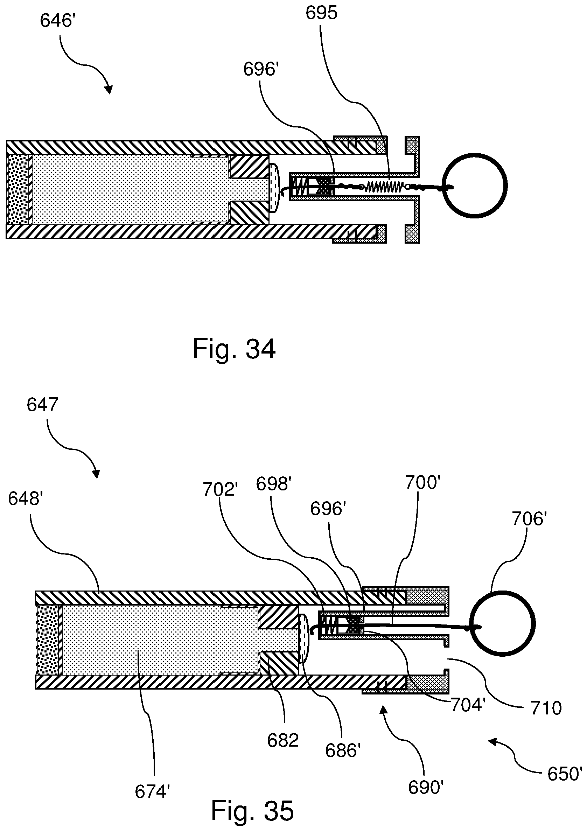

Figure 34 shows another embodiment **646'** of the smoke generator of the invention. Smoke generator **646'** is essentially identical to smoke generator **646** except that it carries an ignition spring within igniter tube **696'.** Ignition spring **695** functions in the same manner as ignition spring **60"** of smoke generator **46"'** as shown in Figure 14 and 15 and as described in § **[0083]**, *supra.*

Figure 35 shows another embodiment of a smoke generator suitable for use with the inventive signal tape. Smoke generator **647** is identical to smoke generator **646** [as shown in Figure 33] except for the cap **690'.** Smoke generator **647** comprises tube **648'**, smoke producing composition **674'**, annular plug **682'** and ignition button **686'** all substantially identical to the similarly numbered elements in smoke generator **646** of Figure 33. Cap **690'** differs from cap **690** in that cap **690'** has a single smoke releasing hole **710** mounted at the distal end **650'** of cap **690'.** Cap **690'** carries on the interior thereof igniter tube **696'** which contains the ignition device for smoke generator **647.** Cap **690'** also differs from cap **690** in that igniter tube **696'** is offset from the center of cap **690'** instead of being mounted in the center of cap **690** as shown in Figure 33. The reason for this offset construction is to make room for smoke releasing hole **710** in the top portion of cap **690'.** Even though a single smoke releasing hole **710** is shown in Figure 35, it is obvious that more than one smoke releasing hole **710** may be placed in the top portion of cap **690'**, if desired. Igniter tube **696'** carries igniter striker **698'** which receives igniter wire **700'.** Ring **706'** is attached to the right hand end of igniter wire **700'.** Igniter striker **698'** is secured within igniter tube **696'** through the interaction of spring **702'** and annular disk **704'.** Spring **702'** is secured within the rear end of igniter tube **696'** and biases igniter striker **698'** towards and against annular disk **704'.** Ignition wire **700'** is threaded through a hole [not shown] in igniter striker **698'** such that when ignition wire **700'** is pulled to the right in figure 35 by ring **706'**, a shower of sparks is created. This shower of sparks falls on ignition button **686'** which then ignites and, in turn, ignites smoke producing composition **674'.** The smoke thus produced by the reaction of smoke producing composition **674'** rushes out through smoke releasing holes **710** because the ignition button **686'** which was sealing the hole [not numbered in the figures] in annular disk **682'** burns up upon ignition by the shower of sparks -- thus opening the afore-mentioned hole in annular disk **682'.**

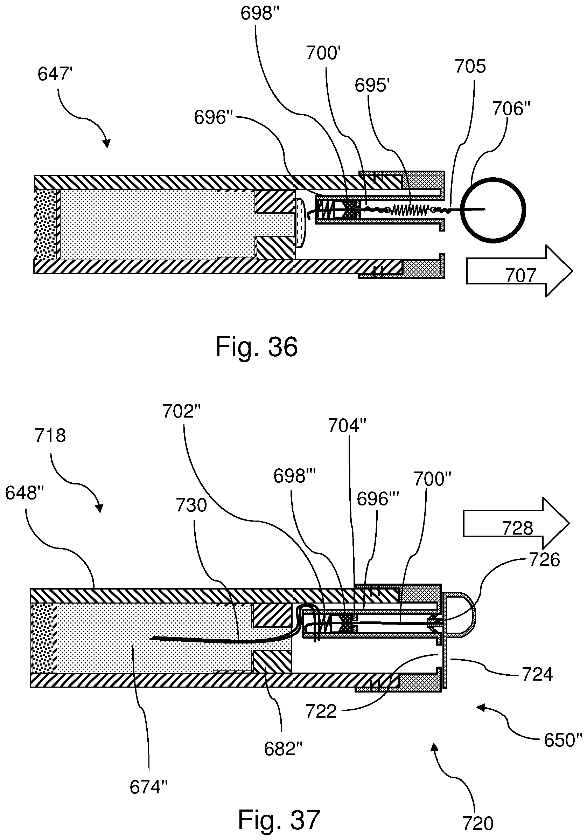

Figure 36 shows another embodiment **647'** of the smoke generator of the invention. Smoke generator **647'** is essentially identical to smoke generator **647** except that it carries an ignition spring **695'** within igniter tube **696".** Ignition spring **695'** is attached at the proximal end to igniter wire **700'** and at its distal end to wire **705** which is connected to ring **706".** When ring **706"** is pulled in the direction of arrow **707,** spring **695'** stores energy to a certain point and then releases that stored energy by giving a smart pull on igniter wire **700'** thus moving it through igniter striker **698"** and causing ignition of smoke generator **647'** in the same manner as ignition spring **60"** of smoke generator **46"'** as shown in Figure 14 and 15 and as described in § **[0083],** *supra.*

Figure 37 shows another embodiment of a smoke generator suitable for use with the inventive signal tape. Smoke generator **718** is similar to smoke generator **647** and smoke generator **647'** [as shown in Figures 35 and 36]. Smoke generator **718** has a different cap **720** than cap **690'** of smoke generator **647.** In addition, smoke generator **718** does not have an igniter button **686'** as smoke generator **647** does. Smoke generator **718** comprises tube **648",** smoke producing composition **674"**, and annular plug **682"** all substantially identical to the similarly numbered elements in smoke generator **647** of Figure 34. Cap **720** is similar to cap **690'** in that cap **720** also has a single smoke releasing hole **722** mounted at the distal end **650"** of cap **720.** Cap **720** carries on the interior thereof igniter tube **696"'** which contains the ignition device for smoke generator **718** in a manner very similar to that shown in Figures 35 and 36 . Cap **720** is similar to cap **690'** in that igniter tube **696"'** is also offset from the center of cap **720** instead of being mounted in the center of cap **690** as shown in Figure 33. The reason for this offset construction is to make room for smoke releasing hole **722** in the top portion of cap **720.** Even though a single smoke releasing hole **772** is shown in Figure 37, it is obvious that more than one smoke releasing hole **722** may be placed in the top portion of cap **720**, if desired.

Igniter tube **696"'** carries igniter striker **698"'** which receives igniter wire **700"** in a hole not shown in the drawings. D-ring closure disk **724** is removably mounted to the distal end **650"** of cap **720** and mounted in such a manner as to close smoke releasing hole **722.** D-ring closure disk **724** also receives the distal end of ignition wire **700"** in such a manner that, when D-ring closure disk **724** is pulled in the direction of arrow **728,** ignition wire **700"** is pulled through the aforementioned hole in igniter striker **698"'** causing a shower of sparks as described above in § [**0098**] in relation to the operation of smoke generator **646.** However, in smoke generator **718**, since ignition button **686** is not present -- the shower of sparks falls upon and ignites two fuses **730** secured in igniter tube **696"'** as shown in Figure 37. Insert portion **726** of D-ring closure disk **724** is releasably mounted, as shown in Figure 37, within igniter tube **696"'** such that D-ring closure disk **724** is secured to distal end **650"** of cap **720** and normally closes smoke releasing hole **722.** When sufficient force is exerted on D-ring closure disk **724** in the direction of arrow **728**, D-ring closure disk **724** will be pulled out of igniter striker **698"'** -- pulling igniter wire **700"** through the hole in igniter striker **698"'** and thus causing the aforementioned shower of sparks to occur and causing the ignition of fuses **730.** Igniter striker **698"'** is secured within igniter tube **696"'** through the interaction of spring **702"** and annular disk **704".** Spring **702"** is secured within the rear end of igniter tube **696"'** and biases igniter striker **698"'** towards and against annular disk **704".**

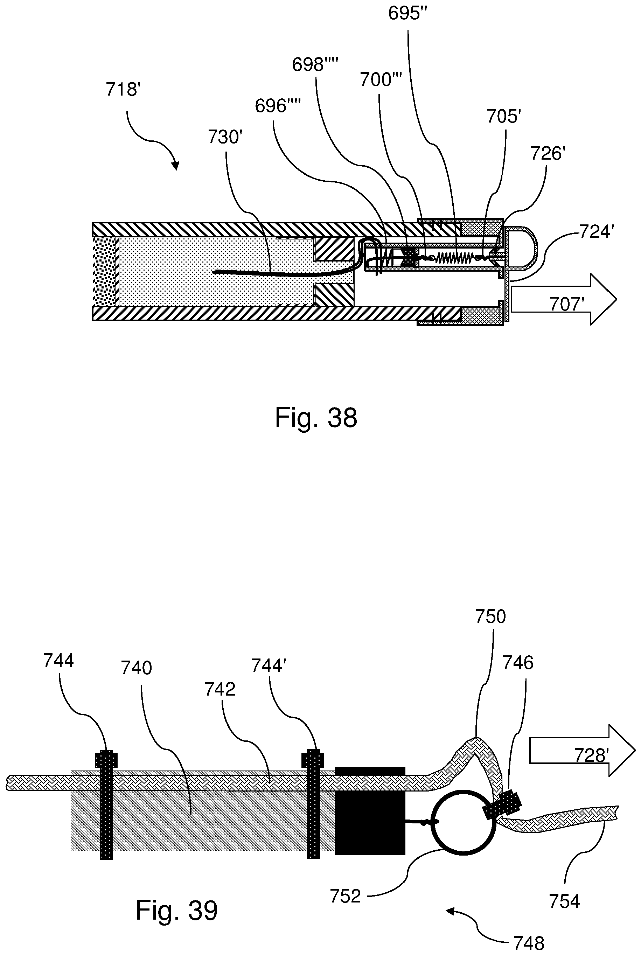

Figure 38 shows another embodiment **718'** of the smoke generator of the invention. Smoke generator **718'** is essentially identical to smoke generator **718** except that it carries an ignition spring **695"** within igniter tube **696""**. Ignition spring **695"** is attached at the proximal end to igniter wire **700"'** and at its distal end to wire **705'** which is connected insert portion **726'** of closure disk **724'.** When closure disk **724'** is pulled in the direction of arrow **707',** spring **695"** stores energy up to a certain point and then releases that stored energy by giving a smart pull on igniter wire **700"'** thus moving it through igniter striker 698"" and causing ignition of smoke generator **718'** in the same manner as ignition spring **60"** of smoke generator **46"'** as shown in Figure 14 and 15 and as described in § **[0083]**, *supra.*

Figure 39 shows one manner of attaching a smoke generator **740** which may be identical to any of smoke generators **646**, **646'**, **647**, **647'**, **718** or **718'** shown in Figures 33 - 38 to a woven fabric core material **742** in the form of an elongated tape. It has been determined through field testing that a fabric core material **742** made from woven polyester tape with a tensile strength from 100 lb_{f} [approximately 445 Newtons] to 2,000 lb_{f} [approximately 8,900 Newtons] works quite well with the inventive signal tape. It has also been found through field testing that fabric core material **742** made of aramid synthetic fiber having a tensile strength of approximately 3,000 lb_{f} [approximately 13,345 Newtons] also works quite well with the inventive signal tape. A shock cord with a 400 lb_{f} [approximately 1,780 Newtons] tensile strength will also work well as the core material. It should be noted that fabric core material **742** simply runs along the outer surface of the body of smoke generator **740** and is tightly attached to smoke generator **740** by two conventional thermoplastic cable ties **744** and **744'.** Fabric core material **742** extends beyond distal end **748** of smoke generator **740** and is looped with extra material as shown at **750** and then tightly attached to ring **752** by conventional cable tie **746.** In this manner a force pulling in the direction of arrow **728'** on distal end **754** of fabric core material **742** will cause ring **752** to be pulled to the right thus igniting smoke generator **740** as discussed above in relation to the smoke generators shown in Figures 33 - 38.

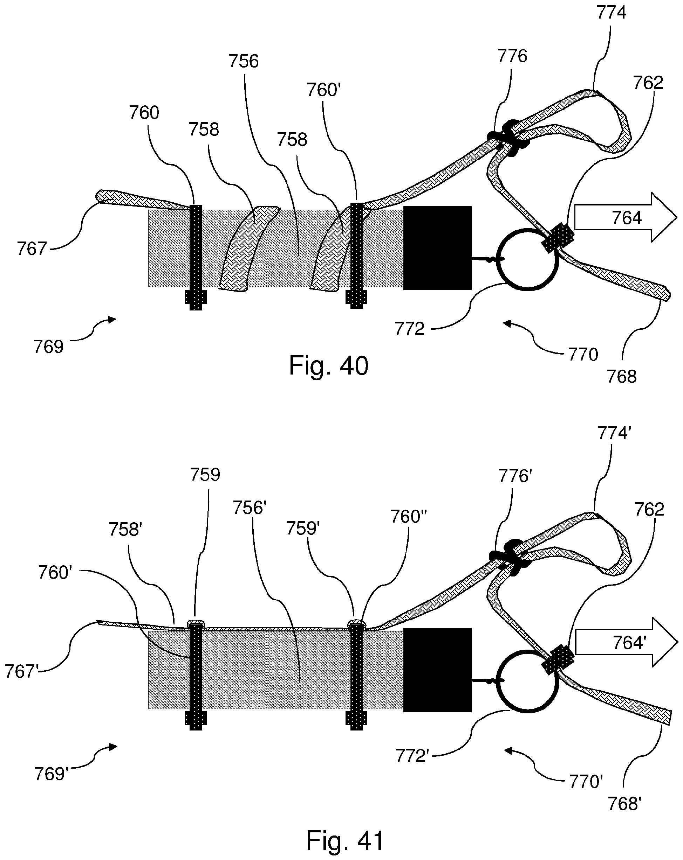

Figure 40 shows another manner of attaching a smoke generator **756** which may be identical to any of smoke generators **646**, **646'**, **647**, **647'**, **718** or **718'** shown in Figures 33 - 38 to a woven fabric core material **758** in the form of an elongated tape. It has been determined through field testing that a fabric core material **758** made from woven polyester tape with a tensile strength from 100 lb_{f} [approximately 445 Newtons] to 2,000 lb_{f} [approximately 8,900 Newtons] works quite well with the inventive signal tape. It has also been found through field testing that fabric core material **758** made of aramid synthetic fiber having a tensile strength of approximately 3,000 lb_{f} [approximately 13,345 Newtons] also works quite well with the inventive signal tape. The proximal end **767** of fabric core material **758** approaches the proximal end **769** of smoke generator **756** and is wrapped around the circumference of smoke generator **756** as show in Figure 40. Fabric core material **758** is tightly attached to smoke generator **756** by conventional cable ties **760**, **760'** . Fabric core material **758** then extends to the distal end **770** of smoke generator **756** and is gathered into a loop of extra core material **774** by elastic band **776** and then fabric core material **758** proceeds to and is tightly attached to ring **772** by conventional cable tie **762.** In this manner a force pulling in the direction of arrow **764** on distal end **768** of fabric core material **758** will cause ring **772** to be pulled to the right thus igniting smoke generator **756** as discussed above in relation to the smoke generators shown in Figures 33 - 38. It is to be understood that smoke generator **756** may or may not have an igniter spring as shown and discussed *supra* with respect to the smoke generators shown in Figures 33 - 38. The choice of whether or not to use an igniter spring is optional and will depend to a certain extent on field conditions encountered where the inventive signal tape is utilized.

Figure 41 shows another manner of attaching a smoke generator **756'** which may be identical to any of smoke generators **646**, **646'**, **647**, **647'**, **718** or **718'** shown in Figures 33 - 38 to a woven fabric core material **758'** in the form of an elongated tape. The proximal end of smoke generator **756'** is shown by the arrow **769'** and the distal end of smoke generator **756'** is shown by arrow **770'.** The proximal end **767'** of fabric core material **758'** approaches the proximal end of smoke generator **756'** and lies on the top portion of smoke generator **756'.** It then proceeds under cable tie **760'** and then is looped back over cable tie **760'** in the direction of proximal end **769'** of smoke generator **756'** as shown at **759** in Figure 41. Fabric core material **758'** then is looped back underneath cable tie **760'** and extends towards the distal end **770'** of smoke generator **756'** all the while lying on the top portion of smoke generator **756'** as shown in Figure 41. As fabric core material approaches the distal end **770'of** smoke generator **756'** it passes underneath cable tie **760"** and is looped back over the top of cable tie **760"** and then back underneath cable tie **760"** and towards the distal end **770'** of smoke generator **756'** as before and as shown in Figure 41. Fabric core material **758'** then extends to the distal end **770'** of smoke generator **756'** and is gathered into a loop of extra core material **774'** by elastic band **776'** and then fabric core material **758'** proceeds to and is tightly attached to ring **772'** by conventional cable tie **762'.** In this manner a force pulling in the direction of arrow **764'** on distal end **768'** of fabric core material **758'** will cause ring **772'** to be pulled to the right thus igniting smoke generator **756'** as discussed above in relation to the smoke generators shown in Figures 33 - 38. Smoke generator **756'** may or may not have an igniter spring as discussed above in § [0106].

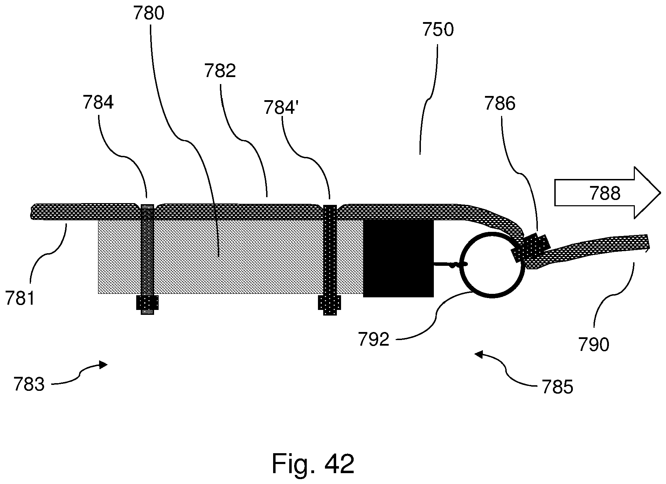

Figure 42 shows another manner of attaching a smoke generator **780** which may be identical to any of smoke generators **646**, **646'**, **647**, **647**'**, 718** or **718'** shown in Figures 33 - 38 to a shock cord core material **782.** The proximal end of smoke generator **780** is shown by the arrow **783** and the distal end of smoke generator **780** is shown by arrow **785.** The proximal end **781** of shock cord core material **782** approaches the proximal end of smoke generator **780** and lies on the top portion of smoke generator **780.** It then proceeds to the distal end **785** of smoke generator **780** along the top of smoke generator **780** as shown in Figure 42. Shock cord core material **782** is tightly clamped to smoke generator **780** by cable ties **784. 784'** and proceeds beyond the distal end **785** of smoke generator **780.** Shock cord core material **782** is tightly clamped to ring **792** by cable tie **786.** In this manner a force pulling in the direction of arrow **788** on distal end **790** of fabric core material **782** will cause ring **792** to be pulled to the right thus igniting smoke generator **780** as discussed above in relation to the smoke generators shown in Figures 33 - 38. Smoke generator **780** may or may not have an igniter spring as discussed above in § **[0106].**

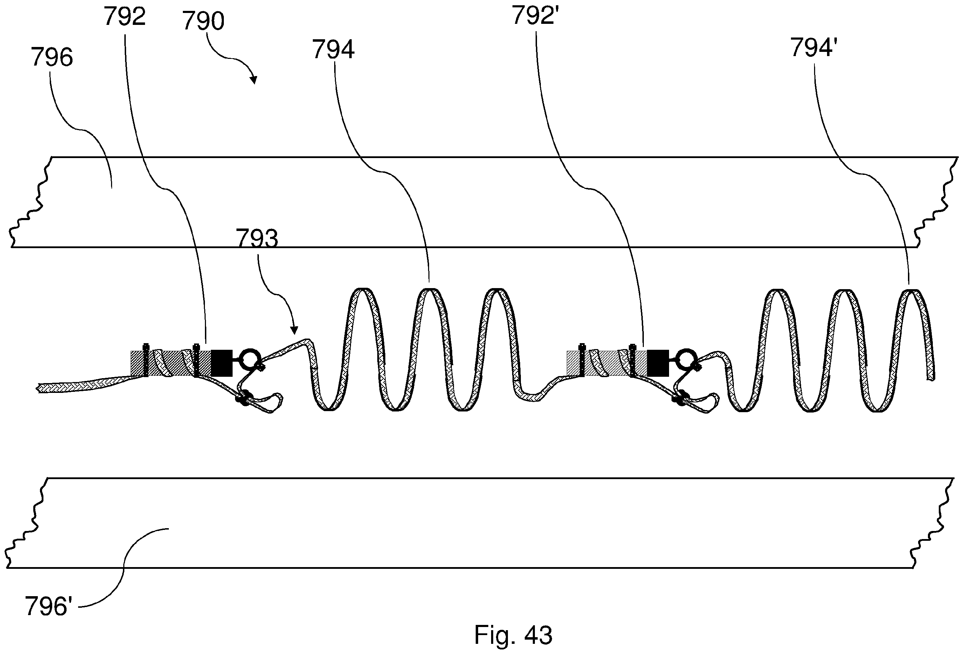

Figure 43 shows a signal tape **790** according to this invention comprising smoke generators **792, 792'** joined by a continuous strip of fabric core material **793** which is attached to smoke generators **792, 792'** as shown in Figure 40. Fabric core material **793** is arrayed in a sinusoidal pattern between smoke generators **792**, **792'** as shown at **794** and **794'.** Thin thermoplastic tapes **796**, **796'** are laminated together with all of the signal tape **790** components to form a continuous signal tape and provide environmental protection for the signal tape **790** components. Tapes **796**, **796'** are joined or sealed so as to fully encase and protect smoke generators **792**, **792'**, and all the components of the smoke generators. The tapes **796**, **796'** may be in the form of tape or any other form of casing which is long and thin but sufficiently robust to provide an environmental barrier as well as withstand the forces of installation. Smoke generators **792**, **792'** may be aligned along the tape to allow for the tape to be rolled up for compact storage [as shown in Figure 6] and installation in the same manner as marker tape is currently installed above a buried infrastructure. Tapes **796**, **796'** must be fully sealed and must provide an impermeable environmental barrier to water and other underground fluids and must provide a protective layer able to withstand the forces of installation and backfill during installation so that smoke generators **792**, **792'** and all of their components remain fully protected and operable *in situ.* Smoke generators **792**, **792'** may or may not have an igniter spring as discussed above in § **[0106].**

The extra core material in sinusoidal patterns as shown at **794**, **794'** of signal tape **790** permits the signal tape to be easily caught and brought to the surface by an excavator bucket digging along the longitudinal direction of the signal tape. A strike by an excavator bucket at an angle approximately 90° to the longitudinal axis poses few issues for catching the signal tape and bringing it to the surface, but the strike in a direction along the longitudinal axis is a more difficult situation -- thus the extra material in the sinusoidal pattern. It is noted that the pattern in which the extra core material is arrayed may be other than sinusoidal. For example, the extra core material is arrayed might be a square wave, a triangular wave or a rectangular wave.

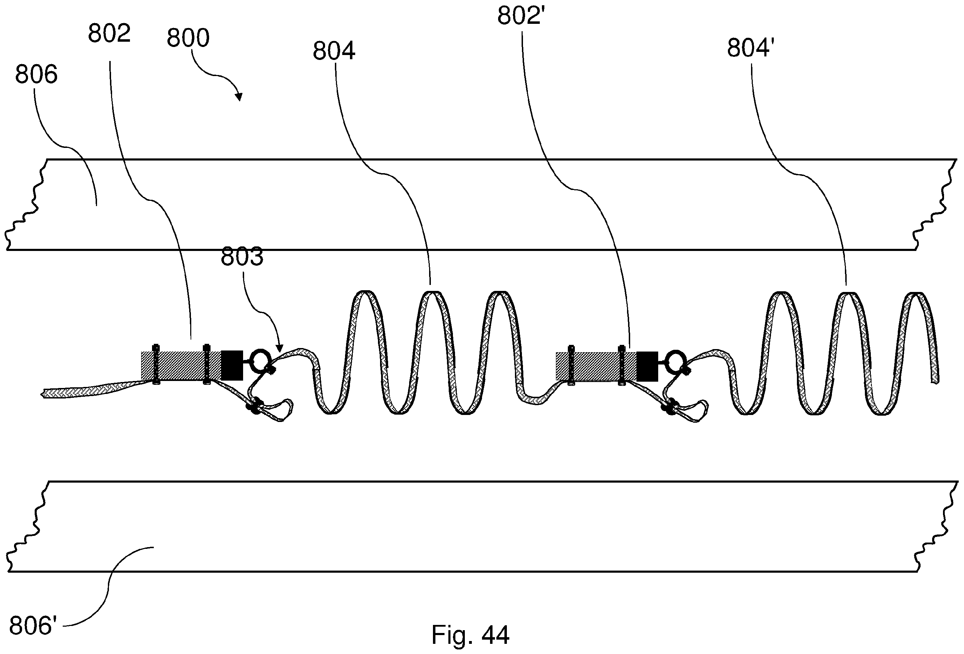

Figure 44 shows a signal tape **800** according to this invention comprising smoke generators **802**, **802'** joined by a continuous strip of fabric core material **803** which is attached to smoke generators **802**, **802'** identical to smoke generator **756'** as shown in Figure 41. Fabric core material **803** is arrayed in a sinusoidal pattern between smoke generators **802**, **802'** as shown at **804** and **804'.** Tapes **806**, **806'** are joined or sealed so as to fully encase and protect smoke generators **802**, **802',** and all the components of the smoke generators. The tapes **806**, **806'** may be in the form of tape or any other form of casing which is long and thin but sufficiently robust to provide an environmental barrier as well as withstand the forces of installation. Smoke generators **802**, **802'** may be aligned along the tape to allow for the tape to be rolled up for compact storage [as shown in Figure 6] and installation in the same manner as marker tape is currently installed above a buried infrastructure. Tapes **806**, **806'** must be fully sealed and must provide an impermeable environmental barrier to water and other underground fluids and must provide a protective layer able to withstand the forces of installation and backfill during installation so that smoke generators **802**, **802'** and all of their components remain fully protected and operable *in situ.* Smoke generators **802**, **802'** may or may not have an igniter spring as discussed above in § **[0106].**

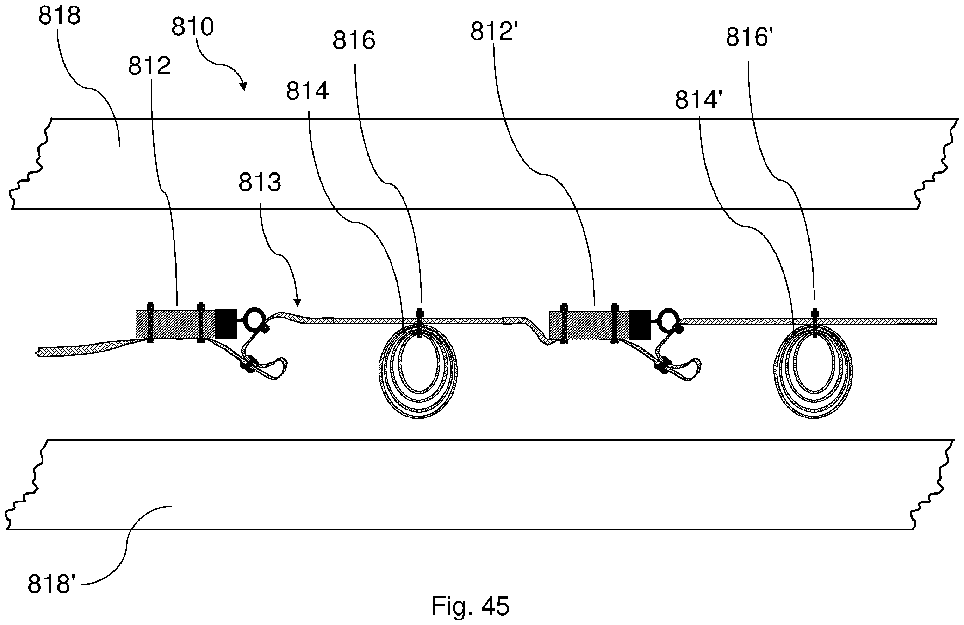

Figure 45 shows a signal tape **810** according to this invention comprising smoke generators **812**, **812'** joined by a continuous strip of fabric core material **813** which is attached to smoke generators **812**, **812'** identical to smoke generator **756'** as shown in Figure 41. Fabric core material **813** is arrayed in a straight line pattern between smoke generators **812**, **812'** as shown in Figure 45. Extra fabric core material **813** is gathered in loops **814** and **814'** and attached to itself with cable ties **816**, **816'** as shown. Tapes **818**, **818'** are joined or sealed so as to fully encase and protect smoke generators **812**, **812'**, and all the components of the smoke generators. The tapes **818**, **818'** may be in the form of tape or any other form of casing which is long and thin but sufficiently robust to provide an environmental barrier as well as withstand the forces of installation. Smoke generators **812**, **812'** may be aligned along the tape to allow for the tape to be rolled up for compact storage [as shown in Figure 6]. Smoke generators **812**, **812'** may or may not have an igniter spring as discussed above in § [0106].

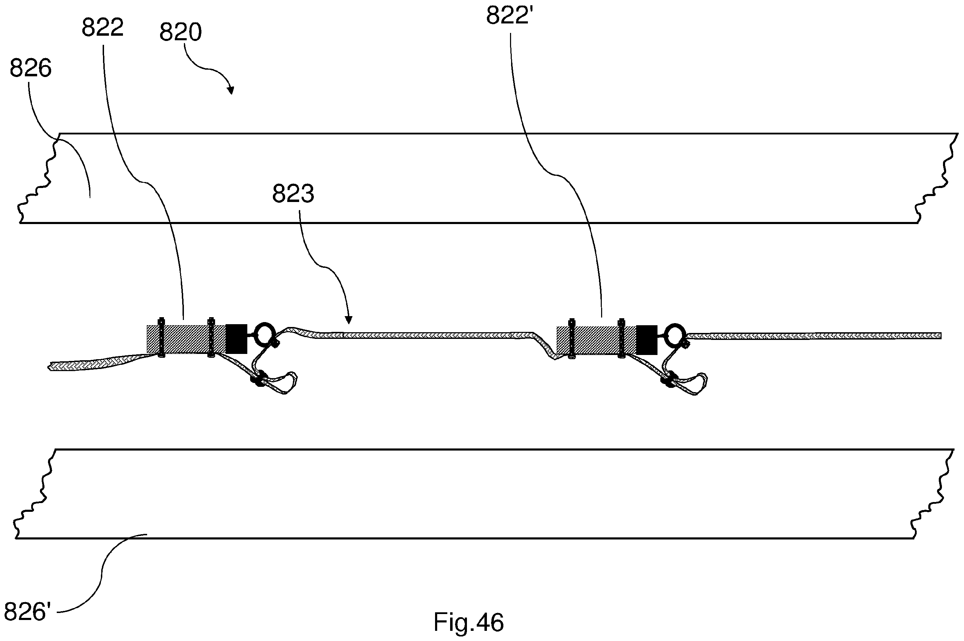

Figure 46 shows a signal tape **820** according to this invention comprising smoke generators **822**, **822'** joined by a continuous strip of fabric core material **823** which is attached to smoke generators **822**, **822'** identical to smoke generator **756'** as shown in Figure 41. Fabric core material **823** is arrayed in a straight line pattern between smoke generators **822**, **822'** as shown in Figure 46. Tapes **826**, **826'** are joined or sealed so as to fully encase and protect smoke generators **822**, **822'**, and all the components of the smoke generators. The tapes **826**, **826'** may be in the form of tape or any other form of casing which is long and thin but sufficiently robust to provide an environmental barrier as well as withstand the forces of installation. Smoke generators **822**, **822'** may be aligned along the tape to allow for the tape to be rolled up for compact storage [as shown in Figure 6]. Smoke generators **822**, **822'** may or may not have an igniter spring as discussed above in § **[0106].**

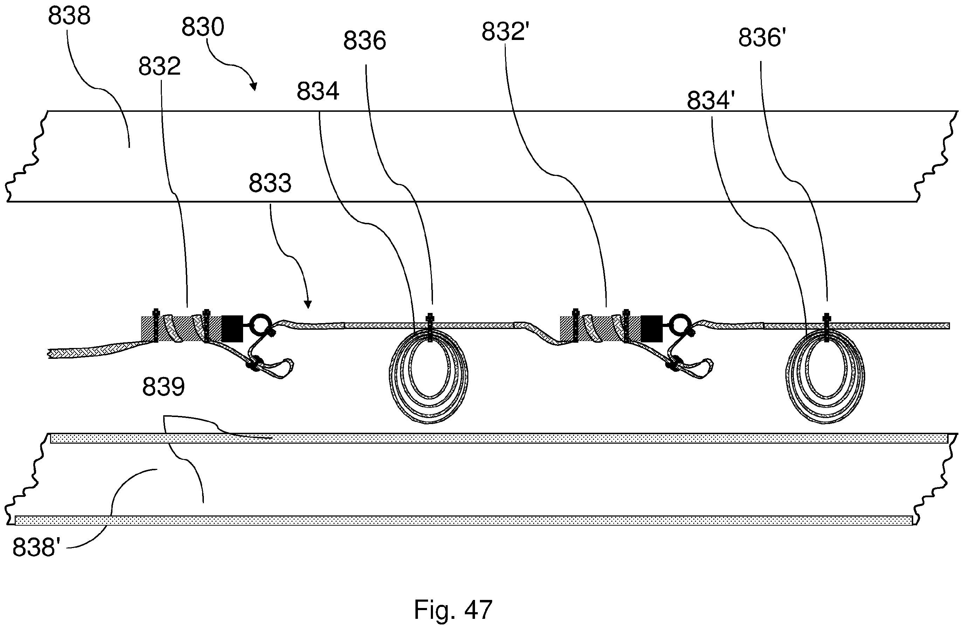

Figure 47 shows a signal tape **830** according to this invention comprising smoke generators **832**, **832'** joined by a continuous strip of fabric core material **833** which is attached to smoke generators **832**, **832'** identical to smoke generator **756** as shown in Figure 40. Fabric core material **833** is arrayed in a straight line pattern between smoke generators **832**, **832'** as shown in Figure 46. Extra fabric core material **833** is gathered in loops **834** and **834'** and attached to itself with cable ties **836**, **836'** as shown. Tapes **838, 838'** are joined or sealed so as to fully encase and protect smoke generators **832, 832',** and all the components of the smoke generators. The tapes **838, 838'** may be in the form of tape or any other form of casing which is long and thin but sufficiently robust to provide an environmental barrier as well as withstand the forces of installation. Tapes **838**, **838'** may have adhesive strips not shown in Figure 47 along the edges of said tapes to adhere tapes **838**, **838'** together. In addition, the entire inner face of tape **838** and/or **838'** may be coated with adhesive. Smoke generators **832**, **832'** may be aligned along the tape to allow for the tape to be rolled up for compact storage [as shown in Figure 6]. Smoke generators **832**, **832'** may or may not have an igniter spring as discussed above in § **[0106].**

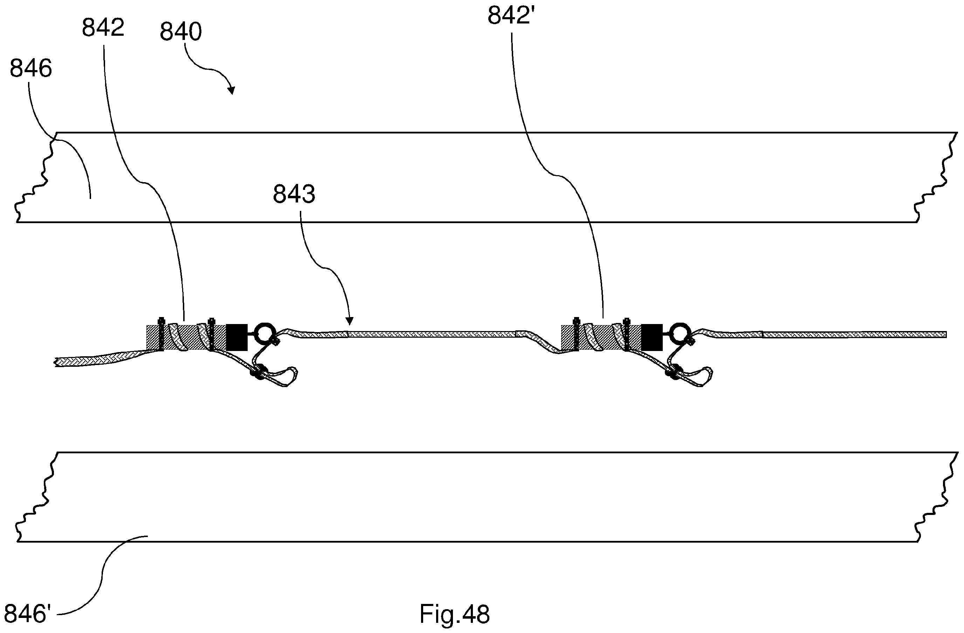

Figure 48 shows a signal tape **840** according to this invention comprising smoke generators **842**, **842'** joined by a continuous strip of fabric core material **843** which is attached to smoke generators **842**, **842'** identical to smoke generator **756** as shown in Figure 40. Fabric core material **843** is arrayed in a straight line pattern between smoke generators **842**, **842'** as shown in Figure 47. Tapes **846**, **846'** are joined or sealed so as to fully encase and protect smoke generators **842**, **842'**, and all the components of the smoke generators. The tapes **846**, **846'** may be in the form of tape or any other form of casing which is long and thin but sufficiently robust to provide an environmental barrier as well as withstand the forces of installation. Smoke generators **842**, **842'** may be aligned along the tape to allow for the tape to be rolled up for compact storage [as shown in Figure 6]. Smoke generators **842**, **842'** may or may not have an igniter spring as discussed above in § **[0106].**

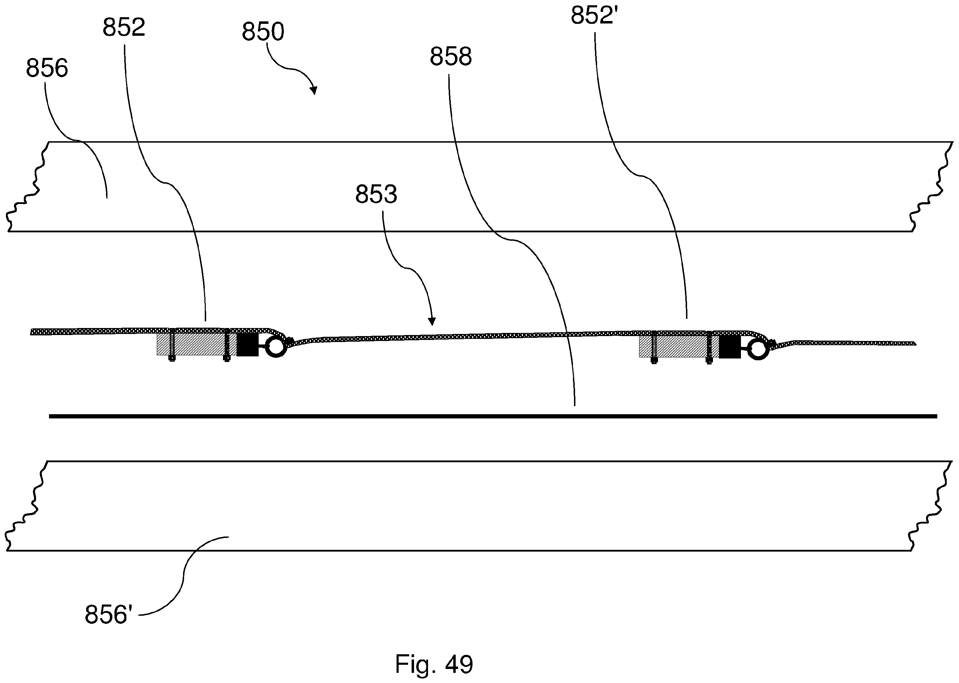

Figure 49 shows a signal tape **850** according to this invention comprising smoke generators **852**, **852'** joined by a continuous strip of shock cord core material **853** which is attached to smoke generators **852**, **852'** identical to smoke generator **780** as shown in Figure 42. Shock cord core material **853** is arrayed in a straight line pattern between smoke generators **852**, **852'** as shown in Figure 48. Tapes **856**, **856'** are joined or sealed so as to fully encase and protect smoke generators **852**, **852'** , and all the components of the smoke generators. The tapes **856**, **856'** may be in the form of tape or any other form of casing which is long and thin but sufficiently robust to provide an environmental barrier as well as withstand the forces of installation. Smoke generators **852**, **852'** may be aligned along the tape to allow for the tape to be rolled up for compact storage [as shown in Figure 6]. Smoke generators **852**, **852'** may or may not have an igniter spring as discussed above in § **[0106].** As shown in Figure 49, signal tape **850** may include a conventional tracer wire **858** to aid in locating signal tape 850 when it is buried underground. The presence of conventional tracer wire **858** permits conventional locating equipment to locate from the surface the underground position of signal tape **850.**

It should be understood that any smoke generator shown in this disclosure, unless specifically identified otherwise may or may not contain an ignition spring. Any or all of the signal tapes disclosed herein may also have conventional tracer wire incorporated therein as shown for signal tape 850 in Figure 49. If incorporated, the tracer wire and the associated signal tape should be buried in a known [and constant] spatial relationship to the underground utility. For example, the tracer wire [or signal tape] may be buried a few inches above [or below] the underground utility or a few inches to one side or the other of the underground utility. The important thing is that, whatever the orientation of the tracer wire [signal tape] to the underground utility, that orientation must be constant and known. When it is desired to locate the underground utility, the tracer wire an AC current is induced in the tracer wire inside the signal tape in order to create a magnetic field. This magnetic field is broadcast from the tracer wire and this magnetic field can be remotely detected and mapped from the ground surface using hand-held conventional magnetic locating devices [receivers]. For example, the "Maggie" or the "GA-92XTd" magnetic locating receivers from Schonstedt Instrument Company. When the tracer wire's location has been mapped, because the spatial relationship between the location of the tracer wire and the underground utility is known, mapping the tracer wire enables the mapping of the underground utility.

A number of companies sell this type of magnetic locating equipment. For example, the CL 300 Cable Locating Kit from Schonstedt Instrument Company contains a magnetic receiver [such as the "Maggie" or the "GA-92XTd" or a similar receiver] a transmitter to apply an AC current directly to a metallic underground utility, to induce an AC current using an inductive clamp, or by remote induction, and the various accessories necessary to map underground utilities or tracer wire. Using the Schonstedt system, the transmitter has the capability to directly broadcast a varying magnetic field from the surface of the ground, which varying magnetic field will then induce the desired magnetic fields in the buried metallic underground utility or tracer wire. Obviously, this last option is more limited with regard to range and the direct electrical connection is the preferred operating mode.

The smoke generators shown herein all use a smoke producing compound that gives smoke with a cool pyrotechnic reaction. The temperatures reached in this reaction are not sufficiently high so as to be capable of igniting natural gas or other hydrocarbons leaked in the vicinity of an active smoke generator. It should be understood, that -- even though all of the smoke generators specifically shown in this application use a cool pyrotechnic reaction to generate smoke -- other types of reactions could be used to generate the desired smoke. For example, chemical reactions between different liquid compounds could be utilized. Compressed, colored gas could also be utilized. These and other types of reactions to produce smoke are discussed in commonly owned U.S. Patent 9,568,121 issued on 14 February 2017. It should be understood that warning indicia [not shown in the drawings] may be imprinted upon the thermoplastic environmental protection tapes which indicia may comprise the type of buried utility, brightly colored backgrounds and industry standard color codes for various buried infrastructure.

The invention herein disclosed relates to signal tape which provides a localized, immediate and forceful signal to an excavation operator of the immediate proximity of and of impending damage to buried infrastructure. Many specific details of certain embodiments of the invention have been set forth above and in Figures 1 - 49 of the drawings to provide a thorough understanding of such embodiments. One skilled in the art, however, will understand that the present invention may have additional embodiments, or that the present invention may be practiced without several of the details described in the foregoing specification.

## Claims

1. An elongated signal tape (10, 10', 10") comprising:
a core material (22, 22') and protective material enclosing said core material;
said protective material comprising a top sheet (30) of thermoplastic material having a first predetermined length and a first predetermined width and a bottom sheet (32) of thermoplastic material having a second predetermined length and a second predetermined width with said first and second predetermined lengths being approximately equal and with said first and second predetermined widths being approximately equal; said core material (22, 22') being positioned between said top (30) and bottom (32) thermoplastic sheets,
said core material (22, 22') having:
a predetermined third length,
an outer surface,
a maximum lateral dimension of approximately one inch (or approximately 2.54 cm),
a minimum predetermined tensile strength,
said core material (22, 22') having at least one smoke generator (12, 12', 12") fastened
thereto along said predetermined third length;
said at least one smoke generator (122, 12', 12") comprising a smoke producing composition (14) and an igniter portion (16) embedded in said smoke producing composition (14) with an ignition wire (18) having first and second ends with said first end embedded within said igniter portion (16),
and with said second end attached to said core material (22, 22') such that relative motion between said core material (22, 22') and said smoke generator (12, 12', 12") will cause said igniter wire (18) to be pulled out of said igniter portion (16), thus igniting said at least one smoke generator (12, 12', 12"); and,
said elongated signal tape (10, 10', 10") further comprising adhesive, bonding at least one of the top (30) or bottom (32) sheet of thermoplastic material to a substantial portion of the outer surface of said core material (22, 22') and also bonding the outer edges of said top(30) and bottom (32) thermoplastic sheets together.

2. The elongated signal tape (10, 10', 10") of claim 1 wherein said core material (22, 22') is generally non-stretchable and further comprises a strip (742) having an upper surface and a lower surface with a maximum width of approximately one inch (or approximately 2.54 cm) and a maximum thickness of approximately 1/4 inch (or approximately 0.635 cm).

3. The elongated signal tape (10, 10', 10") of claim 2 wherein said core material (22, 22') comprises a rope-like material with the maximum lateral dimension of said rope-like material being approximately one inch (or approximately 2.54 cm).

4. The elongated signal tape (10, 10', 10") of claim 2 wherein said minimum tensile strength of said core material (22, 22') is approximately 400 lb_{f} (or approximately 1,780 N) and said predetermined third length of said core material is approximately twice the predetermined first length of said top (30) thermoplastic sheet.

5. The elongated signal tape (10, 10', 10") of claim 2 wherein said predetermined third length of said core material (22, 22') is approximately equal to said predetermined first length of said top (30) thermoplastic sheet and said minimum predetermined tensile strength is approximately 6,000 lb_{f} (or approximately 26,700 N).

6. The elongated signal tape (10, 10', 10") of claim 3 wherein said predetermined third length of said core material (22, 22') is approximately equal to said predetermined first length of said top (30) thermoplastic sheet and said minimum predetermined tensile strength is approximately 6,000 lb_{f} (or approximately 26,700 N).

7. The elongated signal tape (10, 10', 10") of claim 2 wherein a generally straight tracer wire (858) having a predetermined length approximately equal to said predetermined first length of said top (30) thermoplastic sheet is positioned between said top (30) and bottom (32) thermoplastic sheets.

8. The elongated signal tape (10, 10', 10") of claim 2 wherein said minimum tensile strength of said core material (22, 22') is approximately 3,000 lbf (or approximately 13,350 N), said core material (22, 22') is a strip with a maximum width of approximately 1 inch (or approximately 2.54 cm) and said core material (22, 22') has a predetermined thickness of approximately one-sixteenth of an inch (or approximately 0.16 cm) and said predetermined length of said core material (22, 22') is approximately 1.5 times the predetermined length of said top (30) thermoplastic sheet.

9. The elongated signal tape (10, 10', 10") of claim 8 wherein said core material (22, 22') is positioned between said top (30) and bottom (32) thermoplastic sheets in a predetermined waveform pattern.

10. The elongated signal tape (850) of claim 1 wherein said core material (853) comprises a stretchable material having a non-stretched predetermined length and being positioned between said top (856) and bottom (856') thermoplastic sheets, with said core material (853) being capable of being stretched, without breaking, to approximately 1.5 times its non-stretched predetermined length.

11. The elongated signal tape (850) of claim 10 wherein said minimum predetermined tensile strength is at least 100 lbf (or approximately 445 N) and said predetermined third length of said stretchable core material is approximately twice the predetermined first length of said top thermoplastic sheet.

12. The elongated signal tape (850) of claim 10 wherein a generally straight tracer wire (858) having a predetermined length approximately equal to said predetermined length of said top (856) thermoplastic sheet is positioned between said top (856) and bottom (856') thermoplastic sheets.

13. The elongated signal tape of claim 1 wherein said igniter portion further comprises an elongated fuse (58) with one end of said fuse embedded in said smoke producing composition (74) and with the other end of said fuse embedded in a friction igniter (56),
with said friction igniter (56) further comprising an elongated ignition wire (62) adapted to be pulled out of said friction igniter (56) with one end of said ignition wire being embedded in said friction igniter (56) and with the other end of said ignition wire (62) being attached to said core material (64) such that relative movement between said smoke generator (46) and said core material (64) will cause said ignition wire (62) to be pulled out of said friction igniter (56) thus igniting said fuse (58) and thus igniting said smoke producing composition (74).

14. The elongated signal tape of claim 13 wherein said other end of said ignition wire (62) is attached to one end of an ignition spring (60) with said ignition spring having a predetermined spring constant and with the other end of said ignition spring (60) being attached to said core material (64) such that relative motion between said smoke generator (46) and said core material (64) will cause the ignition spring (60) to first stretch and store energy and then to release said energy and pull said ignition wire (62) out of said friction igniter (56) thus igniting said fuse (58) and thus igniting said smoke producing composition (74).

15. The elongated signal tape (10, 10', 10", 850) of claim 4, 8 or claim 10 wherein said core material (22, 22', 853) is positioned between said top (30, 856) and bottom (32, 856') thermoplastic sheets in a predetermined waveform pattern, with said waveform pattern being sinusoidal, triangular, a square wave, or a rectangular wave.

## Patentansprüche

1. Ein längliches Signalband (10, 10', 10"), das Folgendes umfasst:
ein Kernmaterial (22, 22') und Schutzmaterial, welches das Kernmaterial umschließt;
wobei das erwähnte Schutzmaterial eine obere Folie (30) aus thermoplastischem Material mit einer ersten zuvor festgelegten Länge und einer ersten zuvor festgelegten Breite sowie eine untere Folie (32) aus thermoplastischem Material mit einer zweiten zuvor festgelegten Länge und einer zweiten zuvor festgelegten Breite umfasst und wobei die erwähnte erste und die erwähnte zweite zuvor festgelegte Länge einander ungefähr entsprechen und die erwähnte erste und zweite zuvor festgelegte Breite einander ungefähr entsprechen;
wobei das Kernmaterial (22, 22') zwischen der oberen (30) und unteren (32) thermoplastischen Folie angeordnet ist,
wobei das Kernmaterial (22, 22') aufweist:
eine zuvor festgelegte dritte Länge,
eine äußere Oberfläche,
eine maximale seitliche Abmessung von ungefähr einem Zoll (oder ungefähr 2,54 cm),
eine zuvor festgelegte Mindestzugfestigkeit;
wobei das erwähnte Kernmaterial (22, 22') über mindestens einen Rauchgenerator (12, 12', 12") verfügt, der daran auf der zuvor festgelegten dritte Länge befestigt ist;
wobei der erwähnte mindestens eine Rauchgenerator (12, 12', 12") Folgendes umfasst:
ein Rauch erzeugendes Stoffgemisch (14) und eine Zündvorrichtung (16), die in das erwähnte Rauch erzeugende Stoffgemisch (14) eingebettet ist und einen Zünddraht (18) mit ersten und zweiten Enden besitzt, wobei das erwähnte erste Ende in die erwähnte Zündvorrichtung (16) eingebettet ist und das erwähnte zweite Ende so an dem erwähnten Kernmaterial (22, 22') befestigt ist, dass eine relative Bewegung zwischen dem erwähnten Kernmaterial (22, 22') und dem erwähnten Rauchgenerator (12, 12', 12") dazu führt, dass der erwähnte Zünddraht (18) aus der Zündvorrichtung (16) gezogen wird, wodurch auf diese Weise der mindestens eine
Rauchgenerator (12, 12', 12") gezündet wird; und
wobei das längliche Signalband (10, 10', 10") ferner Klebstoff umfasst, durch den
mindestens eine der oberen (30) oder unteren (32) Folien aus thermoplastischem Material mit einem wesentlichen Teil der äußeren Oberfläche des erwähnten Kernmaterials (22, 22') verbunden wird und auch die äußeren Ränder der erwähnten oberen (30) und unteren (32) thermoplastischen Folie miteinander verbunden werden.

2. Längliches Signalband (10, 10', 10") nach Anspruch 1, **dadurch gekennzeichnet, dass** das Kernmaterial (22, 22') im Allgemeinen nicht dehnbar ist und ferner einen Streifen (742) mit einer oberen und einer unteren Oberfläche umfasst, der eine maximale Breite von ungefähr einem Zoll (oder ungefähr 2,54 cm) und eine maximale Dicke von ungefähr 1/4 Zoll (oder ungefähr 0,635 cm) besitzt.

3. Längliches Signalband (10, 10', 10") nach Anspruch 2, **dadurch gekennzeichnet, dass** das Kernmaterial (22, 22') im Allgemeinen nicht dehnbar ist und ein fadenartiges Material umfasst, wobei der maximale Durchmesser des fadenartigen Materials ungefähr einen Zoll (oder ungefähr 2,54 cm) beträgt.

4. Längliches Signalband (10, 10', 10") nach Anspruch 2, **dadurch gekennzeichnet, dass** die erwähnte Mindestzugfestigkeit des erwähnten Kernmaterials (22, 22') ungefähr 400 lbf (oder ungefähr 1780 N) beträgt und die erwähnte zuvor festgelegte dritte Länge des erwähnten Kernmaterials ungefähr das Zweifache der zuvor festgelegten ersten Länge der erwähnten oberen (30) thermoplastischen Folie beträgt.

5. Längliches Signalband (10, 10', 10") nach Anspruch 2, **dadurch gekennzeichnet, dass** die erwähnte zuvor festgelegte dritte Länge des genannten Kernmaterials (22, 22') ungefähr der erwähnten zuvor festgelegten ersten Länge der erwähnten oberen (30) thermoplastischen Folie entspricht und die erwähnte zuvor festgelegte Mindestzugfestigkeit ungefähr 6.000 lbf (oder ungefähr 26.700 N) beträgt.

6. Längliches Signalband (10, 10', 10") nach Anspruch 3, **dadurch gekennzeichnet, dass** die erwähnte zuvor festgelegte dritte Länge des erwähnten Kernmaterials (22, 22') ungefähr der erwähnten zuvor festgelegten ersten Länge der erwähnten oberen (30) thermoplastischen Folie entspricht und die erwähnte zuvor festgelegte Mindestzugfestigkeit ungefähr 6.000 lbf (oder ungefähr 26.700 N) beträgt.

7. Längliches Signalband (10, 10', 10") nach Anspruch 2, **dadurch gekennzeichnet, dass** ein im Allgemeinen gerader Folgedraht (858) mit einer zuvor festgelegten Länge, die ungefähr der erwähnten zuvor festgelegten ersten Länge der erwähnten oberen (30) thermoplastische Folie entspricht, zwischen der erwähnten oberen (30) und unteren (32) thermoplastischen Folie angeordnet ist.

8. Längliches Signalband (10, 10', 10") nach Anspruch 2, **dadurch gekennzeichnet, dass** die erwähnte Mindestzugfestigkeit des erwähnten Kernmaterials (22, 22') ungefähr 3.000 lbf (oder ungefähr 13.350 N) beträgt, wobei das erwähnte Kernmaterial (22, 22') einen Streifen mit einer maximalen Breite von ungefähr 1 Zoll (oder ungefähr 2,54 cm) bildet, wobei das Kernmaterial (22, 22') eine zuvor festgelegte Dicke von ungefähr 1/16 Zoll (oder ungefähr 0,016 cm) aufweist und wobei die erwähnte zuvor festgelegte Länge des erwähnten Kernmaterials (22, 22') ungefähr das 1,5-fache der zuvor festgelegten Länge der erwähnten oberen (30) thermoplastischen Folie beträgt.

9. Längliches Signalband (10, 10', 10") nach Anspruch 8, **dadurch gekennzeichnet, dass** das Kernmaterial (22, 22') zwischen der oberen (30) und unteren (32) thermoplastischen Folie in einem zuvor festgelegten wellenförmigen Muster verlegt ist.

10. Längliches Signalband (850) nach Anspruch 1, **dadurch gekennzeichnet, dass** das Kernmaterial (853) ein dehnbares Material mit einer ungedehnten zuvor festgelegten Länge umfasst und zwischen der oberen (856) und der unteren (856') thermoplastischen Folie angeordnet ist, wobei das erwähnte Kernmaterial (853) bis auf das ungefähr 1,5-fache der ungedehnten zuvor festgelegten Länge gedehnt werden kann, ohne zu reißen.

11. Längliches Signalband (850) nach Anspruch 10, **dadurch gekennzeichnet, dass** die zuvor festgelegte Mindestzugfestigkeit mindestens 100 lbf (oder ungefähr 445 N) beträgt und die vorbestimmte dritte Länge des dehnbaren Kernmaterials ist ungefähr doppelt so groß wie die vorbestimmte erste Länge der oberen thermoplastischen Folie.

12. Längliches Signalband (850) nach Anspruch 10, **dadurch gekennzeichnet, dass** ein im Allgemeinen gerader Folgedraht (858) mit einer zuvor festgelegten Länge, die ungefähr der zuvor festgelegten Länge der erwähnten oberen thermoplastischen Folie (856) entspricht, zwischen der erwähnten oberen (856) und der unteren (856') thermoplastischen Folie angeordnet ist.

13. Längliches Signalband nach Anspruch 1, **dadurch gekennzeichnet, dass** die Zündvorrichtung ferner eine längliche Lunte (58) umfasst, wobei ein Ende der Lunte in das Rauch erzeugende Stoffgemisch (74) und das andere Ende der Lunte in einen Reibungszünder (56) eingebettet ist,
wobei der erwähnte Reibungszünder (56) ferner einen länglichen Zünddraht (62) umfasst, der so ausgeführt ist, dass er aus dem erwähnten Reibungszünder (56) gezogen werden kann, wobei ein Ende des erwähnten Zünddrahtes in den erwähnten Reibungszünder (56) eingebettet ist, und das andere Ende des Zünddrahtes (62) so an dem Kernmaterial (64) befestigt ist, dass eine relative Bewegung zwischen dem Rauchgenerator (46) und dem Kernmaterial (64) bewirkt, dass der Zünddraht (62) aus dem Reibungszünder (56) gezogen wird, wobei auf diese Weise die Lunte (58) gezündet und so das Rauch erzeugende Stoffgemisch (74) entzündet wird.

14. Längliches Signalband nach Anspruch 13, **dadurch gekennzeichnet, dass** das andere Ende des Zünddrahtes (62) an einem Ende einer Zündfeder (60) befestigt ist, wobei die besagte Zündfeder eine zuvor festgelegte Federkonstante aufweist und wobei das andere Ende der Zündfeder (60) so an dem Kernmaterial (64) befestigt ist, dass eine relative Bewegung zwischen dem Rauchgenerator (46) und dem Kernmaterial (64) bewirkt, dass sich die Zündfeder (60) zunächst dehnt und Energie speichert und die Energie anschließend freisetzt und den Zünddraht 62) aus dem Reibungszünder (56) zieht, wodurch die Lunte (58) gezündet und damit das Rauch erzeugende Stoffgemisch (74) entzündet wird.

15. Längliches Signalband (10, 10', 10") nach Anspruch 4, 8 oder 10, **dadurch gekennzeichnet, dass** das erwähnte Kernmaterial (22, 22') in einem zuvor festgelegten wellenförmigen Muster zwischen der erwähnten oberen (30) und unteren (32) thermoplastischen Folie angeordnet ist, wobei das wellenförmigen Muster sinusförmig, dreieckig, eine Rechteckwelle oder eine Rechteckwelle ist.

## Revendications

1. Ruban de marquage longiligne (10, 10', 10") comprenant :
un matériau central (22, 22') et un matériau protecteur entourant le matériau central ;
ledit matériau protecteur comprenant une feuille supérieure (30) en matériau thermoplastique ayant une première longueur prédéfinie et une première largeur prédéfinie et une feuille inférieure (32) en matériau thermoplastique ayant une deuxième longueur prédéfinie et une deuxième largeur prédéfinie, où lesdites première et deuxième longueurs prédéfinies sont environ égales et où lesdites première et deuxième largeurs prédéfinies sont environ égales ; où le matériau central (22, 22') se trouve entre lesdites feuilles thermoplastiques supérieure (30) et inférieure (32),
où le matériau central (22, 22') est pourvu de :
une troisième longueur prédéfinie,
une surface extérieure,
une dimension latérale maximale d'environ un pouce (ou environ 2,54 cm),
une force de traction minimale prédéfinie ;
où ledit matériau central (22, 22') a au moins un générateur de fumée (12, 12', 12") étant fixé à celui-ci le long de la troisième longueur prédéfinie ;
ledit au moins générateur de fumée (12, 12', 12") comprenant un composé produisant de la fumée (14), et une partie allumeur (16) encastrée dans ledit composé produisant de la fumée (14) et ayant un fil d'allumage (18) ayant une première et une deuxième extrémité dont ladite première extrémité est encastrée dans ladite partie allumeur (16),
et dont ladite deuxième extrémité est fixée audit matériau central (22, 22') de telle manière qu'un mouvement relatif entre ledit matériau central (22, 22') et ledit générateur de fumée (12, 12', 12") fait en sorte que ledit fil d'allumage (18) est extrait de la partie allumeur (16), allumant ainsi ledit au moins générateur de fumée (12, 12', 12") ; et,
où le ruban de marquage longiligne (10, 10', 10") comprend de plus un adhésif, liant au moins l'une des couches supérieure (30) ou inférieure (32) du matériau thermoplastique à une partie substantielle de la surface extérieure dudit matériau central (22, 22') et liant également l'un à l'autre les bords extérieurs desdites feuilles thermoplastiques supérieure (30) et inférieure (32).

2. Ruban de marquage longiligne (10, 10', 10") selon la revendication 1 dans lequel ledit matériau central (22, 22') est généralement non extensible et comprend de plus une bande (742) ayant une surface supérieure et une surface inférieure avec une largeur maximale d'environ un pouce (ou environ 2,54 cm) et une épaisseur maximale d'environ 1/4 pouce (ou environ 0,635 cm).

3. Ruban de marquage longiligne (10, 10', 10") selon la revendication 2 dans lequel ledit matériau central (22, 22') comprend un matériau de corderie, où le diamètre maximal dudit matériau de corderie est d'environ un pouce (ou environ 2,54 cm).

4. Ruban de marquage longiligne (10, 10', 10") selon la revendication 2 dans lequel ladite force de traction minimale dudit matériau central (22, 22') est d'environ 400 lbf (ou environ 1780 N) et ladite troisième longueur prédéfinie dudit matériau central vaut environ deux fois la première longueur prédéfinie de ladite feuille thermoplastique supérieure (30).

5. Ruban de marquage longiligne (10, 10', 10") selon la revendication 2 dans lequel ladite troisième longueur prédéfinie dudit matériau central (22, 22') est environ égale à ladite première longueur prédéfinie de ladite feuille thermoplastique supérieure (30) et ladite force de traction minimale prédéfinie est d'environ 6.000 lbf (ou environ 26.700 N).

6. Ruban de marquage longiligne (10, 10', 10") selon la revendication 3 dans lequel ladite troisième longueur prédéfinie dudit matériau central (22, 22') est environ égale à ladite première longueur prédéfinie de ladite feuille thermoplastique supérieure (30) et ladite force de traction minimale prédéfinie est d'environ 6.000 lbf (ou environ 26.700 N).

7. Ruban de marquage longiligne (10, 10', 10") selon la revendication 2 dans lequel un câble traceur généralement droit (858) ayant une longueur prédéfinie environ égale à ladite première longueur prédéfinie de ladite feuille thermoplastique supérieure (30) se trouve entre lesdites feuilles thermoplastiques supérieure (30) et inférieure (32).

8. Ruban de marquage longiligne (10, 10', 10") selon la revendication 2 dans lequel ladite force de traction minimale dudit matériau central (22, 22') est d'environ 3.000 lbf (ou environ 13.350 N), où ledit matériau central (22, 22') est une bande ayant une largeur maximale d'environ 1 pouce (ou environ 2,54 cm) et où ledit matériau central (22, 22') a une épaisseur prédéfinie d'environ un seizième de pouce (ou environ 0,016 cm), et où ladite longueur prédéfinie dudit matériau central (22, 22') est environ égal à 1,5 fois la longueur prédéfinie de ladite feuille thermoplastique supérieure (30).

9. Ruban de marquage longiligne (10, 10', 10") selon la revendication 8 dans lequel ledit matériau central (22, 22') se trouve entre lesdites feuilles thermoplastiques supérieure (30) et inférieure (32) dans un motif prédéfini de forme d'onde.

10. Ruban de marquage longiligne (850) selon la revendication 1 dans lequel ledit matériau central (853) comprend un matériau extensible ayant une longueur prédéfinie non étirée et se trouvant entre lesdites feuilles thermoplastiques supérieure (856) et inférieure (856'), où ledit matériau central (853) peut être étiré, sans casser, jusqu'à environ 1,5 fois sa longueur prédéfinie non étirée.

11. Ruban de marquage longiligne (850) selon la revendication 10 dans lequel ladite force de traction minimale vaut au moins 100 lbf (ou environ 445 N) et ladite troisième longueur prédéterminée dudit matériau de noyau étirable est approximativement le double de la première longueur prédéterminée de ladite feuille thermoplastique supérieure.

12. Ruban de marquage longiligne (850) selon la revendication 10, dans lequel un câble traceur généralement droit (858) ayant une longueur prédéfinie environ égale à la longueur prédéfinie de ladite feuille supérieure en matériau thermoplastique (856) se trouve entre lesdites feuilles thermoplastiques supérieure (856) et inférieure (856').

13. Ruban de marquage longiligne selon la revendication 1 dans lequel ladite partie allumeur comprend de plus une mèche longiligne (58), dont une extrémité de ladite mèche est encastrée dans ledit composé produisant de la fumée (74) et dont l'autre extrémité de ladite mèche est encastrée dans un allumeur à friction (56), où ledit allumeur à friction (56) comprend de plus un fil d'allumage longiligne (62) adapté pour être extrait dudit allumeur à friction (56), dont une extrémité dudit fil d'allumage est encastrée dans ledit allumeur à friction (56) et dont l'autre extrémité dudit fil d'allumage (62) est fixée audit matériau central (64) de telle manière qu'un mouvement relatif entre ledit générateur de fumée (46) et ledit matériau central (64) fait en sorte que le fil d'allumage (62) est extrait de l'allumeur à friction (56), allumant ainsi ladite mèche (58) et allumant ainsi le composé produisant de la fumée (74).

14. Ruban de marquage longiligne selon la revendication 13 dans lequel ladite autre extrémité dudit fil d'allumage (62) est fixée à une extrémité d'un ressort d'allumage (60), lequel ressort d'allumage a une constante de raideur prédéfinie, en dont l'autre extrémité du ressort d'allumage (60) est fixée audit matériau central (64) de telle manière qu'un mouvement relatif entre ledit générateur de fumée (46) et ledit matériau central (64) fait en sorte que le ressort d'allumage (60) tout d'abord s'étire et emmagasine de l'énergie et ensuite libère ladite énergie et extrait ledit fil d'allumage (62) dudit allumeur à friction (56), allumant ainsi ladite mèche (58) et allumant ainsi ledit composé produisant de la fumée (74).

15. Ruban de marquage longiligne (10, 10', 10") selon la revendication 4, 8 ou 10 dans lequel ledit matériau central (22, 22') se trouve dans un motif prédéfini de forme d'onde entre lesdites feuilles thermoplastiques supérieure (30) et inférieure (32) ledit motif de forme d'onde étant sinusoïdal, triangulaire, une onde carrée ou une onde rectangulaire.
